# EUROPEAN PATENT SPECIFICATION

(11) **EP 0 799 435 B1**
(45) Date of publication and mention of the grant of the patent: **28.07.1999**
(21) Application number: 95944160.1
(22) Date of filing: 20.12.1995
(51) Int. Cl.: G02B 27/02, G02B 25/00, H01J 29/89

(54) **COMPOUND MAGNIFIED VIRTUAL IMAGE ELECTRONIC DISPLAY**
ELEKTRONISCHE ANZEIGEVORRICHTUNG MIT "COMPOUND"-VERGROESSERTEN VIRTUELLEN BILDERN
SYSTEME D'AFFICHAGE ELECTRONIQUE D'IMAGE VIRTUELLE COMPOSEE ET AGRANDIE

(30) Priority: 21.12.1994 US 361035; 17.03.1995 US 407102; 15.05.1995 US 441529
(43) Date of publication of application: 08.10.1997
(73) Proprietor: SILISCAPE, INC., Palo Alto, CA 94303 (US)
(72) Inventor: HILDEBRAND, Alfred, P., Palo Alto, CA 94303 (US); KINTZ, Gregory, J., Mountain View, CA 94043 (US)
(74) Representative: Holmes, Miles Keeton
(86) International application number: PCT/US95/16598
(87) International publication number: WO 96/19746

(56) References cited:
- EP-A- 0 566 000
- EP-A- 0 566 001
- EP-A- 0 566 002
- GB-A- 2 004 383
- IBM TECHNICAL DISCLOSURE BULLETIN, vol. 25, no. 12, May 1983, NEW YORK, US, pages 6373-6374, XP002005429 J. E. R. YOUNG: "Head-Mounted Display"

## Description

### BACKGROUND OF THE INVENTION

### Field of the Invention

The invention generally relates to a compact electronic display system. More specifically, the invention relates to a compact electronic display system which provides a virtual image of a microdisplay that has been compound magnified where a reflective function is used to fold the optical train of the electronic display onto itself.

### Description of Related Art

A continuing objective in the field of electronics is the miniaturization of electronic devices. Most electronic devices include an electronic display. As a result. the miniaturization of electronic displays is critical to the production of a wide variety of compact electronic devices.

The purpose of an electronic display is to provide the eye with a visual image of certain information. This visual image may be provided as either a real image or a virtual image. A real image refers to an image which is observed directly by the unaided human eye. A photograph is an example of a real image. Electronic displays which provide a real image generally provide some form of display surface on which the real image is formed and viewed. A real image exists at a given location when, if a viewing surface is positioned at this location. a real image can be observed by the unaided eye. Examples of electronic displays which provide real images include liquid crystal displays, CRT monitors, and projection screens.

In real image electronic displays, the image viewed by the observer is an image created on or projected onto a display surface. As a result, the size of the display surface limits the size of the image that can be provided to the observer. Compact electronic devices, because of their small size, have limited space for a display surface and therefore are only able to accommodate a relatively small display image.

A relatively small display image creates a series of problems for the person viewing the image. The human eye is only able to resolve a limited amount of detail in an image. Two objects can be resolved by the eye as separate objects only when they are separated by a certain minimum angle as measured from the eye. The unaided human eye can resolve objects with an angle of separation of approximately 1-2 arc minutes or more.

The human eye also has difficulty focusing on source objects at very short distances from the eye without causing eye strain. The near point for the unaided human eye is defined as the closest distance that the eye can focus on an object without causing eye strain. The near point for the unaided human eye is about 25 cm for an average middle aged adult. The near point is much longer for an older adult and can be as long as 100 cm.

The display surface of a real image electronic display generally includes an array of small objects, called pixels, which form a real image on the display surface. For the reasons described above, the resolution of the unaided human eye and the near point of the eye determine the minimum pixel size that the unaided human eye can resolve. For an electronic display located at the near point for an average middle aged adult, the minimum separation between pixels that can be resolved by the unaided eye is about 75 x 10⁻⁴ cm, or 75 microns. In order to accommodate for variations in the human eye, the minimum separation between pixels in a real image electronic display should preferably be larger than the minimum resolvable pixel size.

For small real image electronic displays, the display must be viewed at a distance close to the near point of the eye in order to provide the observer with a significant amount of information. As a result, the observer must focus his or her eyes on the small display. The need to focus on a small display each time the electronic display is used creates discomfort and eventually, unwanted eye strain on the observer. The problem of eye strain becomes particularly acute when the observer is only intermittently focusing on the electronic display. It therefore is desirable to employ an electronic display which minimizes the observer's need to refocus his or her eyes in order to view the electronic display.

Another important property of the human eye which determines the utility of an electronic display is the eye's angular field of view of an image. The eye can see over a field of view of up to 100 degrees. The full field of view, as it is referred to herein, is the circular field of view around the axis of the eye having a diameter equal to the largest dimension of the image being viewed. However, beyond 10-15 degrees from the center of the field, the resolution degrades significantly. A comfortable field of view for normal electronic display surfaces is typically in the range of 20- 40 degrees. For real image displays, the field of view is defined as the ratio between the largest dimension of the display surface and the distance from the eye to the display. An example of a display surface with such a field of view would be a TV screen with a 100 cm diagonal viewed at 150 cm. The human eye compensates for the lower resolution at the edges of the display surface by scanning the eye across the display. The scanning of the eye is called eye roll. The eye roll moves the pupil of the eye. The typical distance for the motion of the pupil of an adult is about 1 cm.

An optical system can produce both real and virtual images. Several examples of electronic displays that provide a real image were discussed above. By contrast to a real image, a virtual image is an image which, if a viewing surface were positioned at the location of the virtual image, no image would be observed by the eye. An example of a virtual image is the image of fine print viewed through a magnifying glass. The print not only appears larger, it also appears to be located substantially behind the surface where the print actually exists. By definition, a virtual image can exist at a location where no display surface exists. The size of the virtual image therefore is not limited by the size of a display surface. Virtual image electronic displays thus have the advantage of eliminating the need for a large display surface in order to produce a large electronic image.

A virtual image electronic display must initially form a source object which is then imaged by an optical system to create the virtual image. A substantial advantage of a virtual image electronic display is that the source object initially created may be as small as can be usefully reimaged by the optical system. As a result, virtual image electronic displays may effectively utilize very small microdisplays to form the source object. Pixel sizes may be as small as a few microns in diameter, a size which the unaided eye cannot resolve. Rather, in order to view the source object formed by the microdisplay, substantial magnification of the optical system is required.

A virtual image must be created by an optical system of some kind. In a real image electronic display, it is the eye and the viewing surface properties which determine the viewing parameters. By contrast, in a virtual image display, the optical system determines most of the viewing parameters.

There are three important parameters relating to the ease of viewing the image associated with virtual image displays. The first parameter is the far point which refers to the maximum distance from the eye which the optical system can be held and have the eye still see the entire virtual image. Optical devices which provide a far point which is a short distance from the optic are undesirable due to the inconvenience and discomfort associated with placing the eye in close proximity with the optic. It is therefore preferred that an optic provide a long far point in order to enable the magnified image to be viewed through the optic at a comfortable and convenient range of distances from the optic.

The second parameter relating to the ease of viewing a virtual image is the apparent angular width of the virtual image, commonly referred to as the field of view of the virtual image. The full field of view is defined as the ratio of the largest apparent dimension of the virtual image to the apparent distance to the virtual image. It is generally equivalent to the field of view for a real image display surface.

The third parameter relating to the ease of viewing a virtual image is the transverse distance that the eye may move with respect to the optical system and still have the eye see the entire virtual image through the optical system.

A variety of electronic display systems have been developed for providing a virtual image to the observer. Virtual image electronic display systems may generally be divided into two broad classes, on-axis display systems and off-axis display systems. An on-axis display system refers to a system having components symmetrical about a common optical axis. In a typical on-axis system, any of the component(s) forming the on-axis display system can be rotated about the optical axis without disturbing the display system.

On-axis display systems provide the advantage of producing virtual images with a minimal amount of aberrations. However, on-axis display systems have the disadvantage of being spatially inefficient due to the linear arrangement of the optical components.

By contrast, off-axis display systems refer to display systems where one or more components are positioned such that the symmetry around the optical axis is removed. Any optical system that includes tilted or displaced optics is an off-axis optical system as that term is used herein. By placing one or more components off-axis, off-axis display systems can be adapted to efficiently fit within the contours of the devices in which they are used. However, off-axis display systems have the disadvantage that redirecting an image off-axis introduces aberrations into the image which can significantly deteriorate the image quality produced. The image quality can frequently be enhanced using additional optical elements which reduce the significance of the aberrations. However, these additional optical elements add to the size, complexity and cost of the display.

Off-axis display systems commonly employ optical components having a reflective optical surface, such as a concave reflective mirror, in order to redirect the optical train off-axis. Examples of prior art off-axis electronic display systems employing a reflective element include U.S. Patent No. 3,296,509, U.S. Patent No. 4,717,248, U.S. Patent No. 5,087,166, U.S. Patent No. 5,157,503, U.S. Patent No. 5,291,338, U.S. Patent No. 5,305,124 and U.S. Patent No. 5,357,372.

One problem associated with the use of a reflective optical surface is that the optical path on the object side of the surface and the optical path on the image side of the surface traverse the same physical space. This problem is generally avoided through the use of a second reflective surface, such as a beam splitter, or an optical element, such as an optical grating, which diverts the reflected image of the object off-axis.

A significant advantage associated with compact electronic displays is the fact that they are portable. It is therefore impractical and disadvantageous for a compact electronic display to rely on an external power source. The illumination source used in the electronic display generally requires the greatest amount of energy of the various components used in the electronic display. It is therefore important that the electronic display have an optical design which efficiently uses the illumination source used to form the virtual image.

A need also currently exists for an inexpensive, compact virtual image electronic display which is positionable within a small volume, which provides the observer with a large field of view, a virtual image with a significant degree of eye relief and a large translational distance. In particular, an electronic display system is currently needed which combines the image quality and light efficiency advantages of an on-axis display system with the spacial efficiency provided by off-axis display systems.

### SUMMARY OF THE INVENTION

According to the present invention, there is provided a compact virtual image electronic display system comprising:
a microdisplay for producing a source object;
a beamsplitting magnification optic, the microdisplay and the beamsplitting magnification optic each having a centrepoint defining a first optical axis, the beamsplitting magnification optic having a refractive function and a partially reflective function for receiving light corresponding to the source object, and magnifying and reflecting a portion of the light to produce a magnified virtual image of the source object, the centre of the magnified virtual image and the centrepoint of the magnification optic defining a second optical axis, second optical axis being at an angle φ relative to the first optical axis;
a reflective element positioned to reflect light corresponding to the magnified virtual image toward the beamsplitting magnification optic;
the beamsplitting magnification optic positioned to receive light corresponding to the reflected magnified virtual image, the beamsplitting magnification optic functioning to magnify and transmit a portion of the light corresponding to the reflected magnified virtual image through the beamsplitting magnification optic to provide a compound magnified image of the magnified virtual image to an observer, the angle φ between the first and second optical axes being sufficiently small that the source object is within a full field of view provided by the beamsplitting magnification optic.

When a single beamsplitting magnification optic is employed in combination with a reflective element, the beamsplitting magnification optic serves as both a first, reflective magnification optic to produce a magnified virtual image and as a second, transmissive magnification optic to produce a compound magnified virtual image which is seen by the observer. By using the same optic in a reflective mode as the first magnification optic and in a transmissive mode as the second magnification optic, any aberrations introduced into the image during the first stage of magnification are substantially removed during the second stage of magnification. As a result, the compound magnified virtual image produced is substantially aberration free.

The microdisplay and the magnification optic each have a centrepoint which serves to define a first optical axis. The first magnification optic magnifies the source object to provide a magnified virtual image, the centre of the magnified virtual image defining a second optical axis, the second optical axis being at an angle φ relative to the first optical axis. The second magnification optic provides a compound magnified virtual image of the magnified virtual image within the full field of view provided to an observer by the second magnification optic. By making the angle between the first and second optical axes sufficiently small that the source object is within the full field of view provided by the optic serving as the second magnification optic, the thickness of the display system along the first optical axis can be reduced to less than about 20 mm and more preferably less than about 10 mm. The thickness of the display system along the first optical axis may be further reduced to less than about 7 mm.

The display system of a preferred embodiment can provide a compound magnified virtual image which can be magnified relative to the source object by a factor of at least about 10 and more preferably by a factor of at least about 20. In addition, because the display system is designed to direct most of the imaging light toward the observer's eye, the amount of light needed to illuminate the exit pupil of the device is significantly smaller than traditional displays. In a preferred embodiment, the angle between the first and second optical axes is equal to or less than about 10° and is more preferably equal to or less than about 5°. At these smaller angles, the amount of aberrations in the compound magnified virtual image are significantly reduced.

Any electronically controllable microdisplay may be used in the present invention. The microdisplay is preferably a reflective spatial light modulator. The microdisplay is preferably positioned within the full field of view of the compound magnified virtual image. Accordingly, the observer effectively looks through the microdisplay when viewing the compound magnified virtual image, assuming the optic serving as the second magnification optic is spherically shaped.

The microdisplay preferably forms a source object having an area equal to or less than 400 mm². The microdisplay is also preferably formed of an array of pixels where each pixel has an area equal to or less than about 0.25mm².

In a further, preferred embodiment, the display system includes an eye position sensor system which enables the observer to use his or her eye to interact with a control device which controls the source object produced by the microdisplay and/or functions that the display system performs.

### BRIEF DESCRIPTION OF THE DRAWINGS

Figure 1 illustrates a display system of the present invention in which a beamsplitting magnification optic is employed as the first and second magnification optics.

Figures 2A-B illustrate embodiments other arrangements of the display system (for reference) in which separate first and second magnification optics are used.

Figure 3 illustrates the alignment of the second optical axis relative to the first optical axis such that the source object produced by the microdisplay is within the full field of view of the compound magnified virtual image.

Figures 4A-D illustrate a series of beamsplitting magnification optics which may be used as the beamsplitting magnification in the present invention.

Figure 5 illustrates a first magnification optic which includes a refractive function provided by a proximal surface of the first magnification optic and a reflective function provided by a distal surface of the first magnification optic.

Figure 6 illustrates a first magnification optic which includes a partially reflective surface for use in head-up displays.

Figures 7A-B illustrate an expandable and contractible display system in which Figure 7A illustrates the display system in its contracted state and Figure 7B illustrates the display system in its expanded state.

Figure 8 illustrates the electronics included within the display system for controlling the microdisplay.

Figures 9A-B illustrate an expandable and contractible display system including a beamsplitting magnification optic and a reflective element in which Figure 9A illustrates the display system in its contracted state and Figure 9B illustrates the display system in its expanded state.

Figure 10 illustrates a display system in which a waveguide is used to illuminate a light transmissive microdisplay.

Figure 11 illustrates a display system in which a waveguide is used to illuminate a light transmissive microdisplay.

Figure 12 illustrates a display system in which a light emitting diode is used as the illumination source.

Figures 13A-B illustrates an alternate embodiment of the display system in which Figure 13A illustrates the use of quarter wave guides to prevent light not constituting the compound magnified virtual image from reaching the observer and Figure 13B illustrates the light emitting diode used in the display.

Figure 14 illustrates an embodiment of the display system which includes an eye position sensor system which enables the observer to use his or her eye to interact with a control device to control the source object produced by the microdisplay and/or functions that the display system performs.

Figure 15 illustrates a preferred embodiment of the display system of the present invention in which a single beamsplitting magnification optic is employed.

Figure 16 illustrates an image synthesizing optic formed of a series of micro lenses.

Figure 17 illustrates an array of pixels formed of a diffusive material for use as an image synthesizing optic.

Figure 18 illustrates an example of the synthesized display in which a transmissive image synthesizing optic is employed.

Figure 19 illustrates a second example of the synthesized display in which a reflective image synthesizing optic is employed.

Figures 20A-B illustrates two alternate types of apertures that may be used in the synthesized display in which Figure 20A illustrates an aperture designed to prevent light other than light constituting the image from reaching the image synthesizing optic and Figure 20B illustrates an aperture as a stop that prevents non-deflected light from passing though the aperture.

Figures 21A-B illustrate the incorporation of a synthesized display into an electronic device in which Figure 21A illustrates a cross-sectional view of the device and Figure 21B illustrates a top view of the device.

Figure 22 illustrates the user's field of view with and without an intermediate image synthesizing optic.

### DESCRIPTION OF THE PREFERRED EMBODIMENTS

The present invention relates to an inexpensive, compact virtual image electronic display including a first and a second magnification optic which provide a compound magnified virtual image of a source object formed by a microdisplay where one of the magnification optics is reflective and is used to fold the optical train of the display onto itself, thereby enabling the display system to be housed in a compact volume.

Unlike conventional virtual image display systems, the present invention uses a reflective magnification optic which folds the optical train of the display system onto itself without the need for further reflective optics or beam splitters to divert the optical path of the reflected image relative to the source object. As a result, the spacing between the components employed in the synthesized display of the present invention is significantly reduced such that the display can be positioned within a small space. For example, by using a reflective optic as the first magnification optic, the spacing between the first and second magnification optic is reduced to less than about 15 mm and preferably less than about 8 mm. As a result, the thickness of the display system along the first optical axis is reduced to less than about 20 mm and preferably less than about 10 mm.

In addition, by using two stages of magnification, the components used in the display system can also be reduced in size. According to the present invention, the electronic display is preferably positionable within a volume equal to or less than about 75 cubic centimeters, most preferably equal to or less than about 37.5 cubic centimeters.

The use of a reflective magnification optic provides the additional advantage of increasing the light efficiency of the display system by avoiding light loss that would otherwise occur with the use of beam splitters, optical gratings and other redirecting optics. In addition, by using a first and second magnification optic, each optic may be selected to correct aberrations introduced by the other optic including, but not limited to spherical aberrations, astigmatism, coma, distortion and field curvature.

The electronic display system preferably provides an eye relief equal to or greater than about 15 mm, more preferably equal to or greater than about 25 mm, most preferably equal to or greater than about 35 mm.

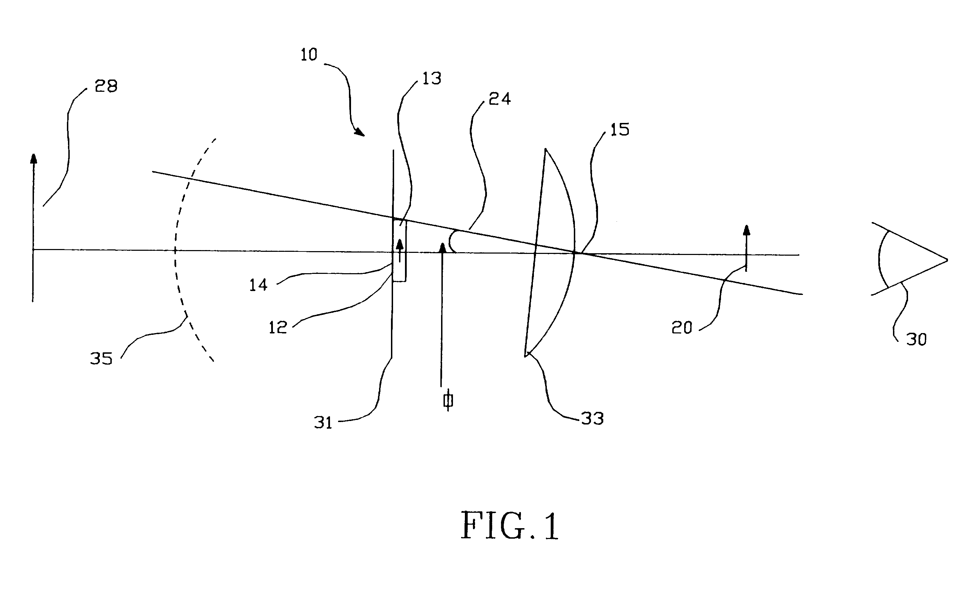

Figure 1 illustrates a particularly preferred embodiment of the display system in which a single beamsplitting magnification optic is employed as both first and second magnification optic. As illustrated in Figure 1, the virtual image electronic display system **10** includes a beamsplitting magnification optic **33** and a microdisplay **12** for producing a source object **14**.

In general, in order for a magnification optic to magnify a source object, the magnification optic must be positioned some distance away from the source object. When a single beamsplitting magnification optic is used, the microdisplay is positioned away from the beamsplitting magnification optic and in the proximity with the reflective element **31**. The microdisplay **12** is preferably positioned between about 3 and 15 mm from the beamsplitting magnification optic **33**, more preferably between about 5 and 10 mm from the beamsplitting magnification optic **33**. It is also preferred that the microdisplay **12** be positioned adjacent the reflective surface **37** of the reflective element **31** opposite the beamsplitting magnification optic **33**, the reflective surface **37** providing a convenient support structure on which to mount the microdisplay **12**.

The centerpoint **13** of microdisplay **12** and the centerpoint **15** of the beamsplitting magnification optic **33** define a first optical axis **18** centered along which the source object **14** is projected toward the beamsplitting magnification optic **33**.

Incorporated into the beamsplitting magnification optic **33** is a magnification function and a reflection function such that the beamsplitting magnification optic **33** images the source object **14** and reflects a magnified virtual image **20** of the source object **14** toward the reflective element **31**. The center of the imaging rays **22** forming the reflected magnified virtual image **20** define a second optical axis **24** that is at an angle φ relative to the first optical axis **18**. The angle φ between the first and second optical axes is equal to or less than about 40° and is preferably equal to or less than about 10° and more preferably equal to or less than about 5°.

The beamsplitting magnification optic **33** also serves as the second transmissive magnification optic in the display system. More specifically, the imaging rays **22** forming the reflected magnified virtual image **20** are reflected off the reflective element **31** back toward the beamsplitting magnification optic **33** which then magnifies the magnified virtual image **20** to produce a compound magnified virtual image **28** of the source object **14** to an observer **30**.

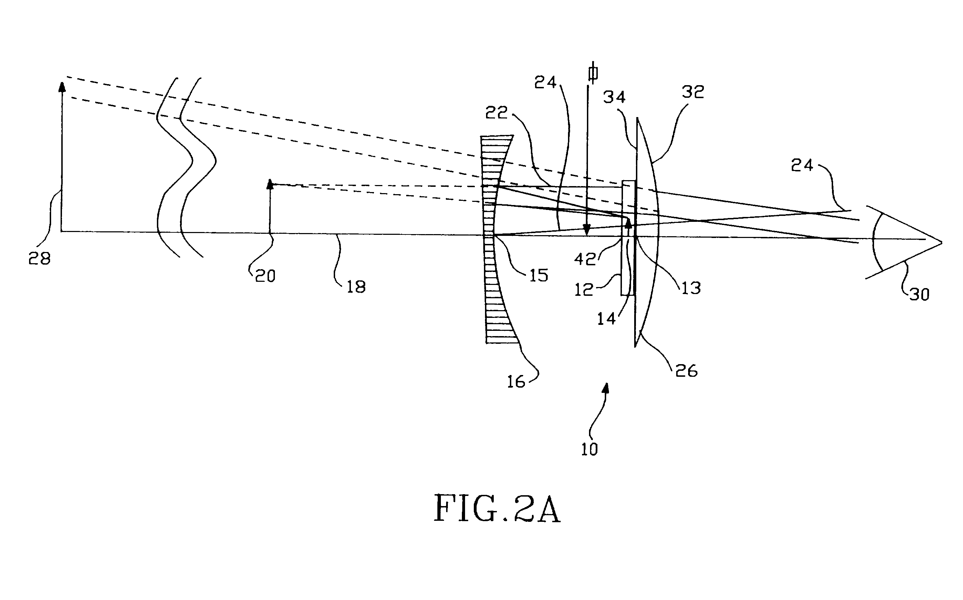

Display systems as illustrated in Figure 1 where a beamsplitting magnification optic **33** is used as both a first and a second magnification optic are optically equivalent to alternate arrangements illustrated in Figures 2A-B in which separate first and second magnification optics are used. Display systems according to Figures 2A-B have previously been described in detail in "Compact Compound Magnified Virtual Image Electronic Display," Application Serial No.: 08/407,102; Filed: March 17, 1995, which is incorporated herein by reference.

As illustrated in Figure 2A, the display system includes a microdisplay **12** for producing a source object **14** and a first magnification optic **16** positioned along a first optical axis **18**, the first optical axis being defined by the centerpoint **13** of microdisplay **12** and the centerpoint **15** of the first magnification optic **16.** The source object **14** is projected toward the first magnification optic **16** and is centered upon the first optical axis **18**.

Incorporated into the first magnification optic is a magnification function and a reflection function such that the first magnification optic **16** images the source object **14** and provides a magnified virtual image **20** of the source object **14** in the direction of the observer **30**. The center of the imaging rays **22** forming the magnified virtual image **20** define a second optical axis **24** that is at an angle φ relative to the first optical axis **18**. The displacement angle φ of the second optical axis **24** relative to the first optical axis **18** is equal to twice the tilt angle of the normal to the center of curvature of the first magnification optic if the optic is tilted. The displacement angle φ is also equal to twice the distance of the normal to the center of curvature of the first magnification optic **16** divided by the radius of curvature of the first magnification optic **16** if the first magnification optic **16** is off center.

The virtual image electronic display system also includes a second magnification optic **26** which receives the magnified virtual image **20** and provides a compound magnified virtual image **28** of the source object **14** to the observer **30** within the full field of view.

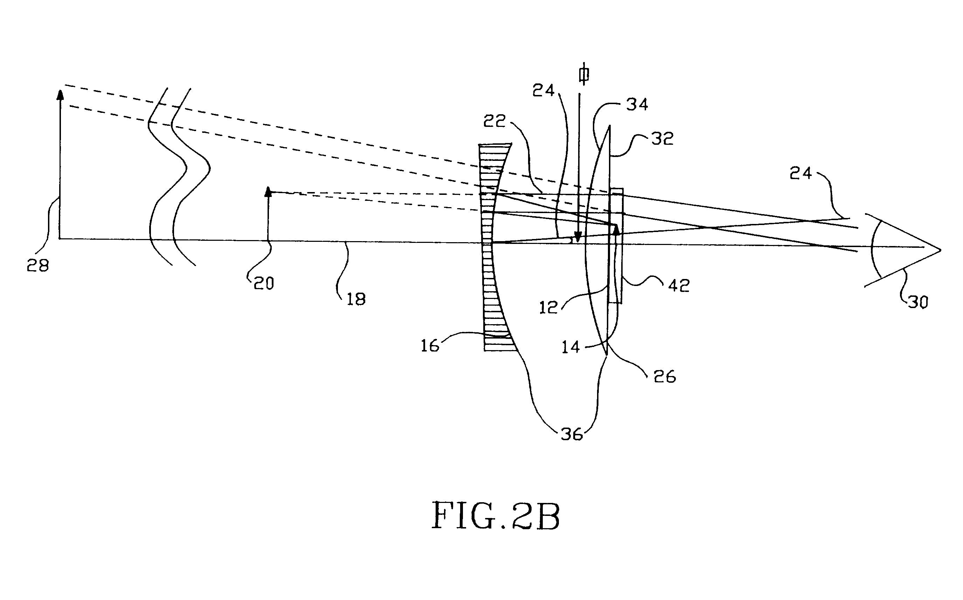

Figure 2B illustrates an alternative display arrangement in which the microdisplay **12** is positioned adjacent the proximal refractive surface **32** of the second magnification optic **26**. According to this arrangement, the source object **14** produced by the microdisplay **12** is imaged by a doublet **36** formed by the combination of the second magnification optic **26** and the first magnification optic **16** such that doublet **36** provides a magnified virtual image **20** of the source object **14** where the imaging rays **22** forming the magnified virtual image **20** have a center which defines the second optical axis **24**. In this embodiment, because the microdisplay is positioned in close proximity to the second magnification optic **26**, the second magnification optic **26** does not significantly alter the appearance of the source object **14** when the source object first passes through the second magnification optic **26** toward the first magnification optic **16**.

The doublet **36** formed by the first and second magnification optics in this embodiment preferably provides a magnification of between about 3 and 10 and preferably has a focal length between about 7.5 and 30 mm. In this arrangement, the second magnification optic **26** also preferably provides a magnification of between about 3 and 10 and a focal length between about 25 and 83 mm when the magnified virtual image **20** is imaged by the second magnification optic **26**. It is also preferred that the eye relief provided by the second magnification optic **26** be equal to or greater than about 15 mm. more preferably equal to or greater than about 25 mm, most preferably equal to or greater than about 35 mm.

As illustrated in Figure 1, reflective element **31** creates a virtual beamsplitting magnification optic, depicted in dashed lines as element **35.** This virtual beamsplitting magnification optic **35** is in roughly the same position as the first magnification optic **16** illustrated in Figure 2. Thus, use ofthe reflective element **31**. in combination with the beamsplitting magnification optic **33**, enables the beamsplitting magnification optic **33** to function as both the first and second magnification optic as described in Application Serial No.: 08/407,102.

By using a single beamsplitting magnification optic in both a reflective mode as the first magnification optic and in a transmissive mode as the second magnification optic, as illustrated in Figure 1, the partially reflective optic **33** serves as its own complementary optic, cancelling out many of the aberrations introduced into the image by the first stage of magnification during the second stage of magnification. As a result, the compound magnified virtual image produced is substantially free of aberrations.

The use of a single beamsplitting magnification optic also provides the advantage that the optical train is folded onto itself a second time. As a result, the spacing between the components employed in the embodiment of the synthesized display illustrated in Figure 1 is further reduced over that which is achieved using separate first and second magnification optics. For example, by using a reflective element **31** in combination with the beamsplitting magnification optic **33**, the thickness of the display system along the first optical axis may be reduced to less than about 15 mm and preferably less than about 7 mm.

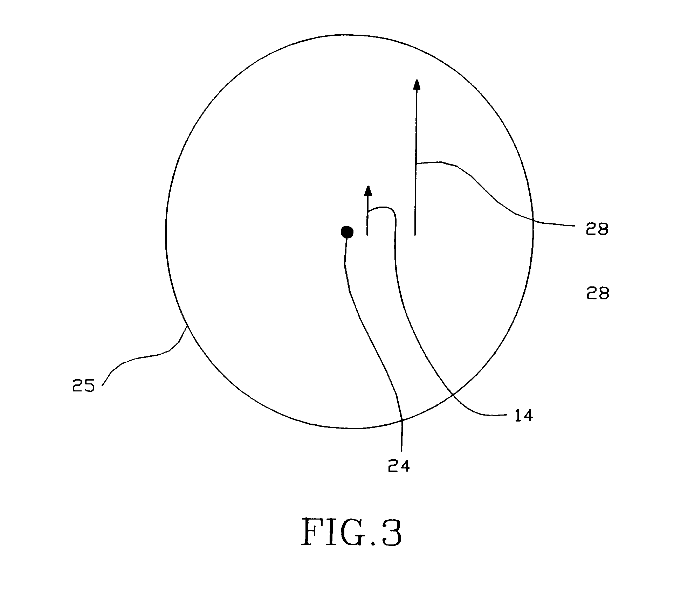

The second optical axis is preferably aligned relative to the first optical axis as illustrated in Figure 3 such that the source object **14** produced by the microdisplay **12** is within the full field of view **25** of the second magnification optic **26**. This generally requires that φ be less than about 40°. Accordingly, the observer effectively looks through the microdisplay when viewing the compound magnified virtual image **28**. "Full field of view," as the term is used herein, is intended to indicate that if one were to block a portion of the field of view **25** illustrated in Figure 3 such that the observer is not effectively looking through the microdisplay when viewing the compound magnified virtual image **28**. the full field of view nonetheless refers to the entire circular field of view as illustrated in Figure 3. It is preferred that the angle between the first and second optical axes is equal to or less than about 10° and more preferably equal to or less than about 5°. At these smaller angles. the amount of aberrations in the compound magnified virtual image are significantly reduced.

The electronic display systems of the present invention preferably provide an eye relief equal to or greater than about 15 mm. more preferably equal to or greater than about 25 mm, most preferably equal to or greater than about 35 mm. The electronic display also preferably provides an image which is at least equivalent in size to a computer monitor (24 cm x 18 cm) when viewed at 50 cm. This size is roughly equivalent to a large screen TV (100 cm diagonal) when viewed at 165 cm. The electronic display also preferably provides about a 34° field of view (17° to either side of the central optical axis).

The beamsplitting magnification optic preferably provides a compound magnified virtual image that is magnified by a factor of at least 10 relative to the source object, more preferably a factor of at least 20. The beamsplitting magnification optic also preferably has a focal length between about 25 mm and 100 mm. It is also preferred that the beamsplitting magnification optic be between about 25% and 75% reflective, most preferably about 50% reflective.

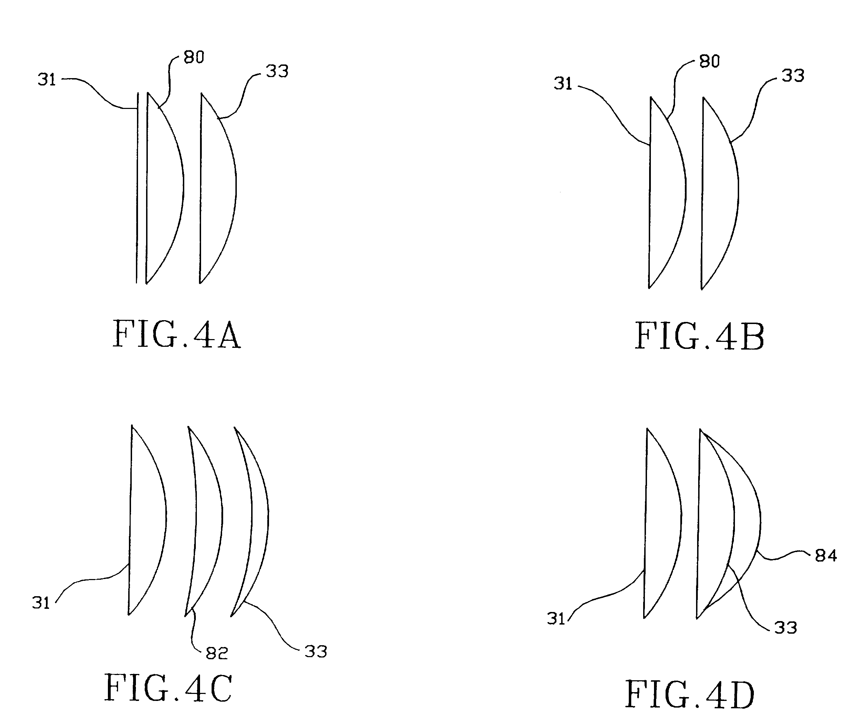

The beamsplitting magnification optic may include a simple single optic as illustrated in Figure 1. Alternatively, more complex optics may be used as the beamsplitting magnification optic and are intended to fall within the scope of the present invention. Figures 4A-D illustrate a series of optical designs which may be incorporated into the beamsplitting magnification optic in the display systems of the present invention. It should be understood that the series of optical designs illustrated in Figures 4A-D are in no way exhaustive of the different optical designs that may be used.

Figure 4A illustrates an additional optical element **80** being inserted between the beamsplitting magnification optic **33** and the reflective element **31**. Figure 4B illustrates an additional optical element **80** where the reflective element **31** has been integrally incorporated into the additional optical element **80**. Figure 4C illustrates an optical system similar to the optical system illustrated in Figure 4B except that an additional optical element **82** has been inserted into the system. Figure 4D illustrates an optical system where an additional optical element **84** has been added after the beamsplitting magnification optic **33**.

The additional optical elements in all of the optical systems illustrated in Figures 4A-D can be used to correct optical aberrations including field curvature, coma. astigmatism and distortion. In addition, the shapes of the surfaces of the optical elements can be any aspheric optical surface. The optical materials used to form the optical elements can be different for the different optical elements.

By using a beamsplitting magnification optic **33** is used in place of separate first and second magnification optics (as illustrated in Figure 2), only a portion of the light forming the magnified virtual image is reflected by the optic. When the beamsplitting magnification optic **33** images the source object **14** and reflects a magnified virtual image **20** toward the reflective element **31**, a portion of the light is transmitted through the beamsplitting magnification optic **33** toward the observer **30**, the percentage depending on the beamsplitting optic used. The light transmitted through the beamsplitting magnification optic **33** is generally not in focus and thus does not interfere with the observer's perception of the compound magnified virtual image **28**, except with regard to contrast ratio.

In addition, only a portion of the imaging rays **22** forming the reflected magnified virtual image **20** are transmitted through the beamsplitting magnification optic **33** as the compound magnified virtual image **28** to the observer **30**. The other portion of the light is reflected by the beamsplitting magnification optic **33** toward the reflective element **31**. This reduces the light intensity of the compound magnified virtual image **28** provided to the observer **30**.

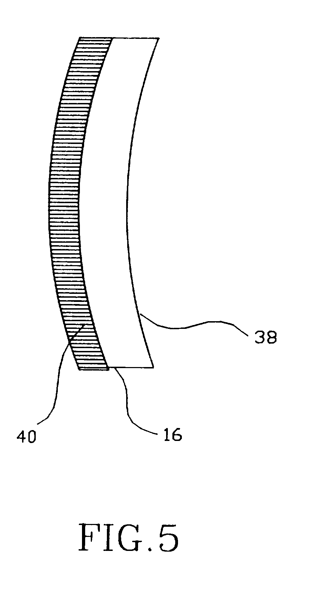

In the comparative arrangement in which separate first and second magnification optics are used, regardless of whether the microdisplay **12** is positioned near the proximal **32** or distal **34** surface of the second magnification optic **26** or within the second magnification optic **26**. the first magnification optic **16** may, be modified as illustrated in Figure 5 to include a refractive function provided by the proximal surface **38** of the first magnification optic **16** and a reflective function provided by the distal surface **40** of the first magnification optic **16**. The refractive function provided by the proximal surface **38** may be used to offset any distortions created by the other optics in the system in order to provide a compound magnified virtual image which is as minimally distorted as possible. For example. the refractive function provided by the proximal surface **38** may be used to correct aberrations in the system including, but not limited to spherical aberrations, astigmatism, coma, distortion and field curvature.

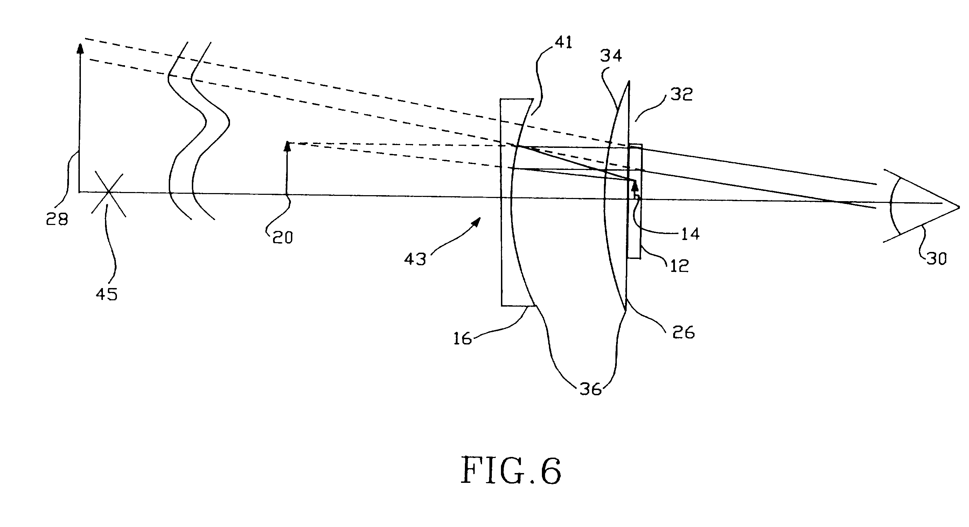

The first magnification optic **16** may also be modified as illustrated in Figure 6 to include a partially reflective surface **41** such that a observer **30** viewing the compound magnified virtual image **28** can also visualize real objects **45** positioned behind **43** the first magnification optic **16**. In this regard. the partially reflective surface **41** is designed to provide an undistorted view of the real objects positioned behind **43** by offsetting any distortions created by the other optics in the system. A display system employing this design is particularly suited for use in a head-up display system where an electronically generated image, such as the compound magnified virtual image **28** is superimposed with a real object positioned behind the display system.

The first magnification optic **16** and the second magnification optic **26** may be designed to introduce field curvature into the magnified virtual image **20** and the compound magnified virtual image **28** respectively such that a complementary degree of positive and negative field curvature is introduced by each optic. Accordingly, it is particularly preferred that the first and second magnification optics **16**, **26** be selected such that the first and second magnification optics **16, 26** act in concert to substantially eliminate any field curvature introduced by either magnification optic individually. Elimination of field curvature in this manner can be performed regardless of whether the microdisplay **12** is positioned near the proximal **32** or distal **34** surface of the second magnification optic **26**.

With regard to all of the above-described embodiments and arrangements, the first and second magnification optics **16, 26; 33** can be used to magnify the source object **14** formed by the microdisplay **12** by a factor equal to or greater than about 10 and more preferably equal to or greater than a factor of about 20. By using two separate magnification optics, the display is able to employ smaller components and a more compact layout than would be possible using a single magnification optic, thereby enabling the display to be positioned within a compact space. In addition, by employing two stages of magnification, the degree of magnification needed in the second stage is reduced which, in turn, provides the observer with a wider field of view and longer eye relief as compared to high power magnifying lens. In addition, the second magnification optic can be focused at a point near infinity which reduces the amount of eye strain caused when the observer focuses his or her eyes on the synthesized display.

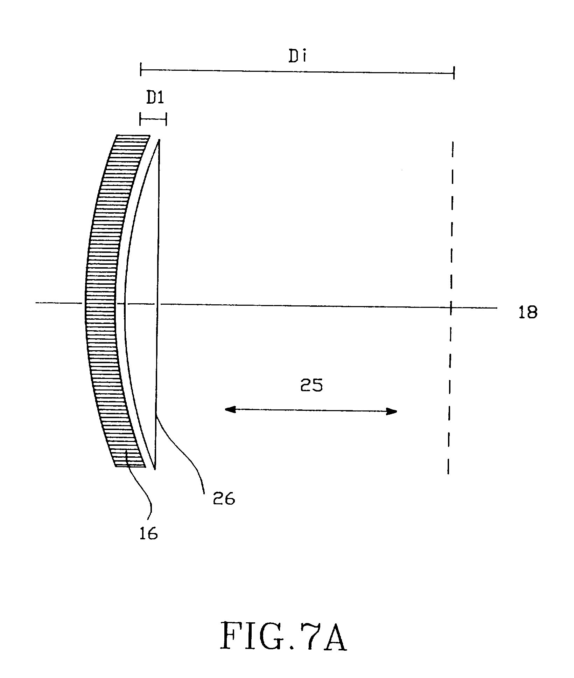

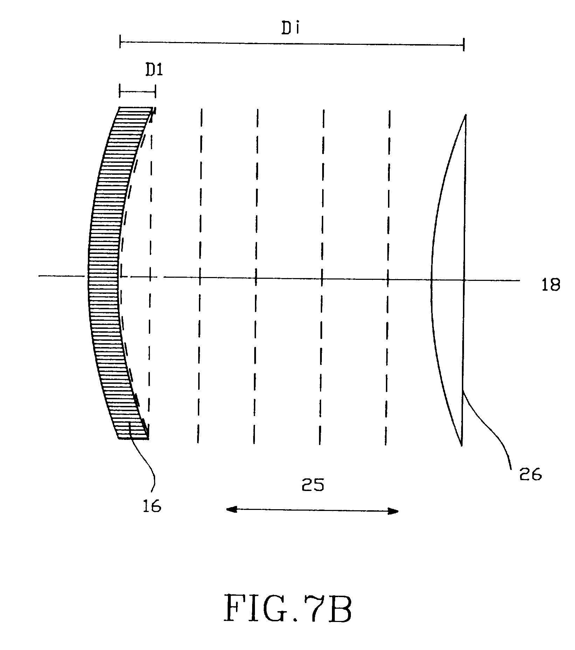

With regard to all of the above-described embodiments and arrangements, the display system can be modified to be expandable and contractible along the first optical axis **18**. As illustrated in Figure 7A, the display system can be contracted such that the first magnification optic **16** is brought in contact with the second magnification optic **26**. As illustrated in Figure 7B, the display system can be expanded by increasing the distance **25** between the first magnification optic **16** and the second magnification optic **26**. When the display system is expandable and contractible, the display system may be designed such that there are a series of distances **D**_{**1**} **- D**_{**i**} at which the first magnification optic **16** may be positioned relative to the second magnification optic **26**. In an alternate, preferred embodiment, the distance **25** between the first magnification optic **16** and the second magnification optic **26** can be adjusted to any distance between **D**_{**1**} and **D**_{**i**}.

The electronic display systems of the present invention are intended as inexpensive electronic components which may be incorporated into any electronic device in which an electronic display is used. In particular, the display system is designed for use in pocket-sized electronic devices. Examples of such devices include, but are not limited to, portable computers, personal communicators, personal digital assistants, modems, pagers, video and camera viewfinders, mobile phones, television monitors and other hand held devices.

As discussed herein, the display system may include additional components which reduce the amount of light transmitted through the beamsplitting magnification optic 33 which does not correspond to the compound magnified virtual image, thereby improving the image contrast ratio provided to the observer by the display system.

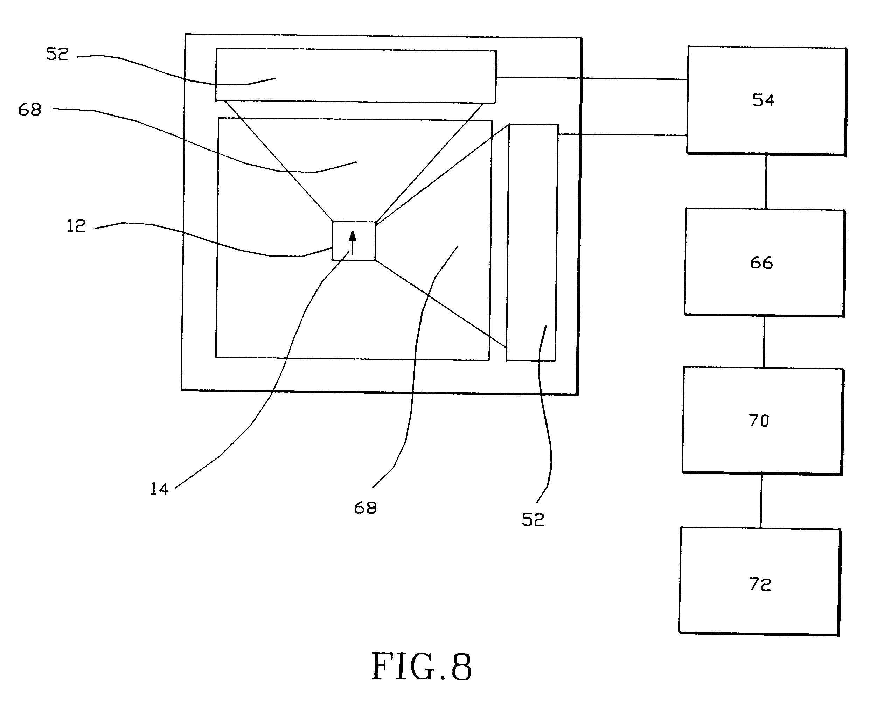

Figure 8 illustrates the electronics included within the display system for controlling the microdisplay. As illustrated in Figure 8, the microdisplay **12** includes an input **52** which is electronically attached by electrodes **68** to the microdisplay **12**. Also connected to the input **52** is a control device **54** for conveying electrical signals through the input to control the generation of the source object **14**. The control device **54** may also be connected to a logic processor **66** which is also connected to external memory **70** which may be controlled through an external data source **72**. In a preferred embodiment, the microdisplay **12** is a row-column addressed display system. The microdisplay **12** is connected to the input **52** such as shift registers through optically transparent electrodes **68** such as indium tin oxide or any other suitable optical transparent conducting material. The input **52**, shift registers are connected to a control device **54** such as a character generator with timing and decoding logic. The control device **54** is controlled by a processor **66** which manipulates the data from the external memory **70**. The external memory receives the information from the external data source **72** such as an external radio receiver. The external data source **72** could also be infrared diode data link to another computer, LAN system, or any other device capable of sending analog or digital communications. In a preferred embodiment, the external memory **70** and external data source **72** is a separate PCMCIA card which can be connected to a computer or communication system.

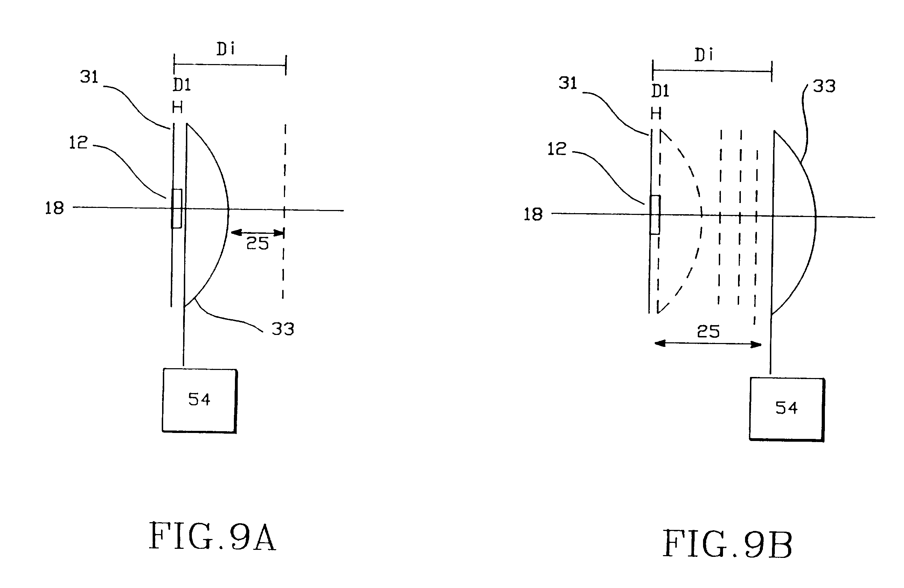

The display systems of the present invention can be modified to be expandable and contractible along the first optical axis **18**. As illustrated in Figure 9A, the display system can be contracted such that the beamsplitting magnification optic **33** is brought in contact with the reflective element **31**. As illustrated in Figure 9B, the display system can be expanded by increasing the distance **25** between the beamsplitting magnification optic **33** and the reflective element **31**. When the display system is expandable and contractible, the display system may be designed such that there are a series of distances **D**_{**1**} **- D**_{**i**} at which the beamsplitting magnification optic **33** may be positioned relative to the reflective element **31**. In an alternate, preferred embodiment, the distance **25** between the beamsplitting magnification optic **33** and the reflective element **31** can be adjusted to any distance between **D**_{**1**} and **D**_{**i**}**.**

When the display system is in a contracted state, eye relief provided by the display system is maximized. However, the magnification provided by the display system is reduced. As the display system is expanded, the magnification provided by the display system increases and the eye relief decreases. The adjustability of the separation between the beamsplitting magnification optic **33** and the reflective element **31** thus provides the observer with the ability to adjust the magnification and ergonomics of the display system.

The display system preferably includes a distance adjusting mechanism which adjusts the distance between the beamsplitting magnification optic **33** and the reflective element **31**. The distance adjusting mechanism is preferably controllable by the observer.

The display system also preferably includes a distance sensing mechanism which senses the distance **25** between the beamsplitting magnification optic **33** and the reflective element **31** and conveys a control signal to the control device **54** indicating the distance. Information regarding the distance between the beamsplitting magnification optic **33** and the reflective element **31** can then be employed by the control device **54** to modulate the source object formed by the microdisplay. For example, the sensed distance between the beamsplitting magnification optic **33** and the reflective element **31** can be used by the control device **54** to modulate the size of the characters formed by the microdisplay since the distance **25** dictates the magnification of the source object **14** provided by the display system.

Modulation of the source object may be performed automatically or in response to a control signal provided by the observer (e.g., the observer presses a button). For example, the display system may include a control mechanism which enables the observer to modify the size of the source object by sending a control signal to the control device.

Modulation of the magnification and focus of the display system may also be performed automatically or in response to a control signal provided by the observer. For example, the display system may include a control mechanism which enables the observer to control the distance adjusting mechanism, thereby controlling the distance between the first and second magnification optics.

The microdisplay **12** used in the display system **10** of the present invention may be any electronically activated display which can produce a source object of any type. For example, the microdisplay may be a liquid crystal display, a spatial light modulator, a grating, a mirror light valve or a LED array. Microdisplays may generally divided into two categories, reflective and light transmissive displays.

When the microdisplay is reflective, the microdisplay does not permit light to pass through the display. Therefore, when a reflective microdisplay is positioned within the full field of view, one must look around the microdisplay in order to see the compound magnified virtual image. When the microdisplay is larger than the pupil size of the eye, generally between about 3-7 mm, substantial vignetting of the compound magnified virtual image can occur. It is therefore preferred that the reflective microdisplay be as small as possible, preferably equal to or less than 49 mm² and more preferably equal to or less than 9 mm².

When the microdisplay is light transmissive, it is possible to view the compound magnified virtual image by looking through the microdisplay. Therefore, there is no size constraint on the microdisplay when the microdisplay is substantially light transmissive such that the microdisplay may be larger than the pupil size of the eye. A scattering mode liquid crystal display is an example of a substantially light transmissive microdisplay.

The microdisplay **12** preferably produces a source object having a surface area equal to or less than about 25 mm², most preferably equal to or less than about 9 mm². However, it should be understood that microdisplays which can produce larger source objects may be employed. It is also preferred that the microdisplay **12** form a source object **14** using an array of pixels **11** on the microdisplay **12** wherein each pixel has an area equal to or less than about 1600 square microns, more preferably equal to or less than about 25 square microns.

In one embodiment of the present invention, the microdisplay **12** used to form the source object **14** is a spatial light modulator. Spatial light modulators, also known as light valves, are well known in the art for use in electronic display systems. In general, a spatial light modulator includes an addressable array of light modulating mirror elements which modulate incident light in a spatial pattern to produce an image. The array of modulating elements are modulated in response to an electrical or optical input where each light modulating element corresponds to a pixel of the image generated by the light modulator. Incident light may be modulated by the modulating elements with regard to phase, intensity, polarization, or direction. Light modulation may be achieved using a variety of materials exhibiting electrooptic or magnetooptic effects and by materials that modulate light by surface deformation. Electrical control of the addressable mirror elements forming the spatial modulator is described in U.S. Patent No. 4,441,791 issued to Hornbeck which is incorporated herein by reference. In the present invention, a spatial light modulator is used to form a source object which is then magnified in two magnification stages. Examples of spatial light modulators that may be used in the synthesized display of the present invention and their principle of operation are described in U.S. Patent Nos. 4,638,309, 4,680,579 issued to Ott, U.S. Patent No. 5,287,215 issued to Warde, U.S. Patent Nos. 4,441,791, 4,710,732, 4,596,992, 4,615,595, 4,662,746 and 5,061,049, 5,280,277 issued to Hombeck, U.S. Patent Nos. 5,287,096 and U.S. Patent No. 5,170,283 issued to O'Brien, all of which are incorporated herein by reference. When a single beamsplitting magnification optic is used as both the first and second magnification optic, it is preferred that the microdisplay be a reflective spatial light modulator.

In an alternate embodiment, the microdisplay is a light transmissive microdisplay. In general, a light transmissive microdisplay is any electronically activated display which produces an image of any type which, when light is transmitted through the microdisplay, some fraction of the light passing through the display is not modulated by either phase, polarization, direction or intensity. For example, a number of liquid crystal displays modulate the polarization of light. By using a light polarizing liquid crystal display in combination with one or more polarizing elements, a substantially light transmissive microdisplay can be formed. In a particularly preferred embodiment, the liquid crystal display is a cholesteric-nematic phase transition liquid crystal display. This type of display scatters some of the light through the display.

As illustrated in Figure 3, the imaging rays **22** forming the magnified virtual image **20** are preferably arranged in such a manner that the second optical axis is aligned relative to the first optical axis such that the source object **14** produced by the microdisplay **12** is within the field of view **25** of the compound magnified virtual image **28**. This generally requires that the second optical axis **24** be within about 40° of the first optical axis **18**. When the source object **14** produced by the microdisplay **12** is within the field of view **25** of the compound magnified virtual image **28**, the observer effectively looks through the microdisplay to visualize the compound magnified virtual image **28** because the microdisplay **12** is positioned in the near field of the observer's vision when the observer is focusing on the compound magnified virtual image **28** positioned in the observer's far field of vision.

Illumination is generally required to project the source object **14** formed by the microdisplay **12** onto the magnification optic. When the microdisplay is a light transmissive microdisplay, illumination is provided from the rear of the microdisplay. When the microdisplay is a reflective, illumination is provided so that the illumination is reflected off the imaging surface of the microdisplay onto the optic serving as the first magnification optic .

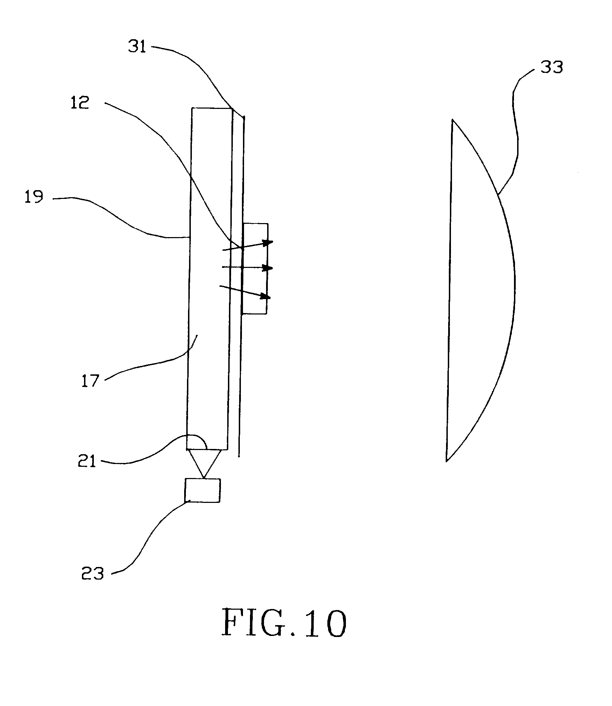

One approach to providing illumination to a light transmissive microdisplay is through the use of a wave guide. As illustrated in Figure 10, an optical wave guide **17** may be formed by two glass plates **19** which are also used to form a cholesteric-nematic phase transition liquid crystal display microdisplay **12**. Illumination is introduced into the wave guide **17** at one side **21** of the glass plates **19** by an illumination source **23.** The illumination introduced into the wave guide **17** is then scattered by the cholesteric-nematic phase transition liquid crystal display such that some of the illumination is directed toward the beamsplitting magnification optic **33.** Illumination may also be provided to a light transmissive microdisplay using a direct light source, such as a light emitting diode, positioned behind the light transmissive microdisplay. A variety of other methods are known in the art for providing illumination to a light transmissive microdisplay and are intended to fall within the scope of the present invention.

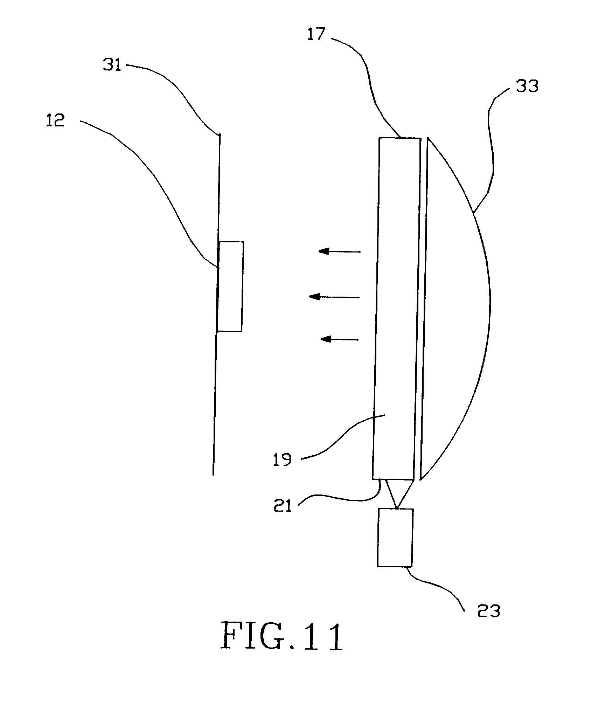

One approach to providing illumination to a reflective microdisplay is also through the use of a wave guide. As illustrated in Figure 11, an optical wave guide **17** may be formed by two glass plates **19**. Illumination is introduced into the wave guide **17** at one side **21** of the glass plates **19** by an illumination source **23.** The waveguide is designed to direct illumination toward the reflective microdisplay **12.**

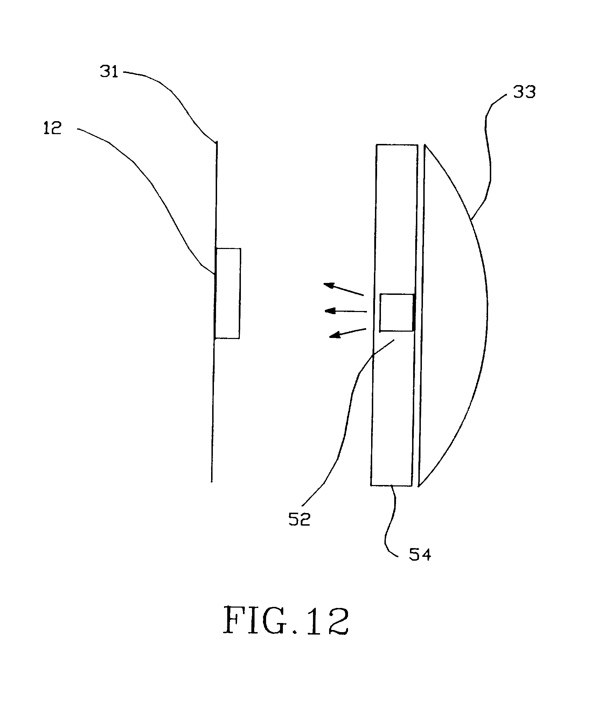

An alternate approach to providing illumination to a reflective microdisplay is through the use of a direct light source, such as a light emitting diode. the use of a light emitting diode as an illumination source for a reflective microdisplay is illustrated in Figure 12. As illustrated in Figure 12, the display system includes a beamsplitting magnification optic **33**, a reflective element **31** and a microdisplay **12**. A light emitting diode **52** is embedded in a glass spacer **54**, the light emitting diode **52** being arranged to direct light toward the reflective microdisplay **12.**

When a beamsplitting magnification optic **33** is employed as both the first and second magnification optic, the beamsplitting magnification optic **33** transmits and reflects a percentage of the light, the precise percentage depending on the optic used. It is preferred that the beamsplitting magnification optic **33** reflect between about 25 and **75** percent of the light, more preferably about 40 and 60 percent of the light.

In order to improve the image contrast ratio provided to the observer by the display system, it is preferred that the display system include additional components which reduce the amount of light transmitted through the beamsplitting magnification optic **33** which does not correspond to the compound magnified virtual image. Figures 13A-B illustrate one embodiment of the present invention in which a series of quarter wave plates are used in combination with vertical polarizers to improve the contrast ratio of the display system.

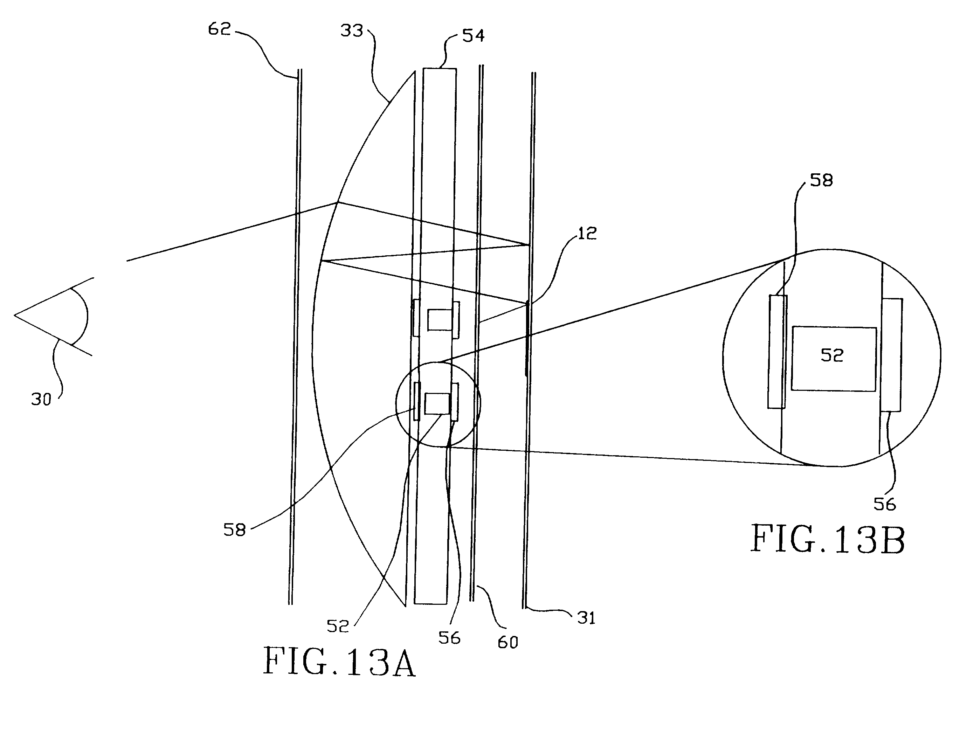

The display system illustrated in Figure 13A includes a beamsplitting magnification optic **33**, a reflective optic **31**, a microdisplay **12**, and a light emitting diode **52** embedded in a glass spacer **54** as illustrated with regard to Figure 12. As illustrated in more detail in Figure 13B, the light emitting diode **52** includes a vertical polarizer **56** and an aluminum mirror **58** such that the light emitting diode **52** provides vertically polarized illumination. A quarter waveplate **60** is positioned between the beamsplitting magnification optic **33** and the reflective optic **31**. A polarizer **62** is positioned between the beamsplitting magnification optic **33** and the observer **30** which only allows vertically polarized light to pass.

According to this embodiment, the vertical polarizer **56** converts the light emitted from the light emitting diode **52** into vertically polarized light. The light is then passed through a quarter waveplate which converts the light into right or left circularly polarized light. This light is then reflected off of the reflective microdisplay **12** to form a source object **14** which is projected toward the beamsplitting magnification optic **33**. Prior to reaching the beamsplitting magnification optic **33** the light corresponding to the source object **14** passes through the quarter waveplate **60** again which converts the light into horizontally polarized light. Once past the quarter waveplate **60**, light corresponding to the source object **14** reaches the beamsplitting magnification optic **33** where a portion of the light is reflected back toward the reflective element **31** as the magnified virtual image **20** of the source object **14**. A second portion of the light traverses the beamsplitting magnification optic **33** and reaches the polarizer **62**. The light traversing the beamsplitting magnification optic **33** and thus is not able to traverse the polarizer **62** and reach the observer **30.**

The portion of the light reflected off the beamsplitting magnification optic **33** toward the reflective element **31** as the magnified virtual image **20** traverses the quarter waveplate **60** which converts the light into right or left circularly polarized light. Once past the quarter waveplate **60**, the light reflected off the reflective element **31** where it again traverses the quarter waveplate **60**, the quarter waveplate **60** converting right or left circularly polarized light into vertically polarized light.

Once past the quarter waveplate **60,** the vertically polarized light corresponding to the magnified virtual image **20** reaches the beamsplitting magnification optic **33** where a portion of the light is reflected back toward the reflective element **31.** A second portion of the light is magnified as it traverses the beamsplitting magnification optic **33** and forms a compound magnified virtual image **20** of the source object **14**. The light traversing the beamsplitting magnification optic **33** is vertically polarized light and is thus able to traverse the polarizer **62** and reach the observer **30** as the compound magnified virtual image **20**.

Table 1 below summarizes what happens to the portions of the light corresponding to the source object **14** which are reflected or transmitted by the beamsplitting magnification optic **33** in the display system illustrated in Figures 13A-D.

As illustrated in Table 1, 25% of the light forming the source object is conveyed to the observer **30** as the compound magnified virtual image. 6.25% of the light reaches the observer **30** as unfocused light (approximately 1 % more of the light also reaches the observer **30** as unfocused light after several additional reflections). The remainder of the light is blocked by the polarizer **62.** As a result, the display system as illustrated in Figures 13A-D provides a contrast ratio of the compound magnified image to unfocused background light of 4:1. The light transmitted through the beamsplitting magnification optic b that does not correspond to the image is not in focus and thus does not interfere with the observer's perception of the compound magnified virtual image **28,** except with regard to the contrast ratio.

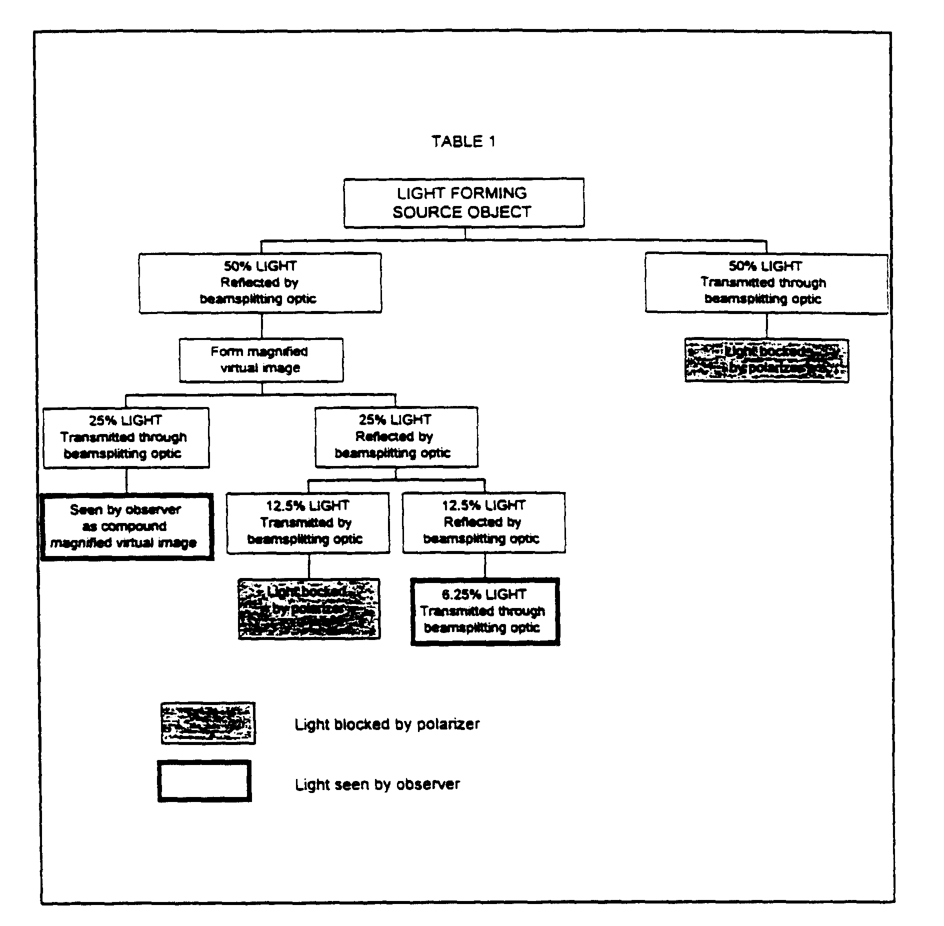

The electronic display may also include an intermediate image synthesizing optic which provides a synthesized electronic display with enhanced eye relief and a wider field of view than is possible using a traditional compound magnification system. For example. the synthesized electronic display enables the observer to view the display over a 34 degree full angle field of view with at least about a 35 mm eye relief.

In a further, preferred embodiment, the display system includes an eye position sensor system which enables the observer to use his or her eye to interact with a control device. Through this interaction, the eye position sensor system may be used to control the source object produced by the microdisplay. The eye position sensor system may also be used to control a variety of functions performed by the display system, for example, directing a printer to print a document or directing a facsimile machine to send a message. According to this embodiment, the position of the observer's eye is detected and used, much like a cursor, to interact with the controlling device **54** to control the source object **14** produced by the microdisplay **12.**

Devices, such as eye trackers and occulometers, for detecting the position of the eye, are well known in the art. For example, suitable devices which may be used in conjunction with the virtual mouse sensor system include the devices described in United Kingdom Patent Application GB 2270171A and U.S. Patent No. 4,513,317, each of which is incorporated herein by reference.

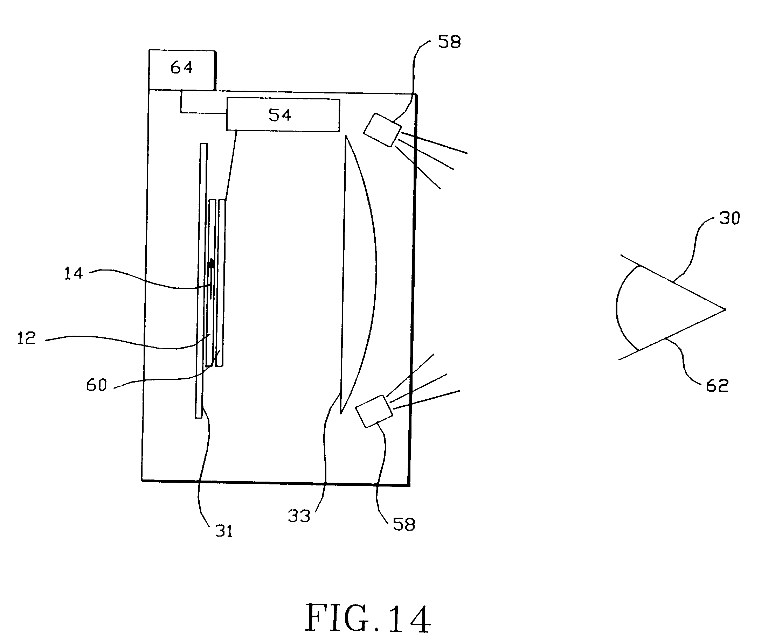

In one embodiment illustrated in Figure 14, the eye position sensor system **56** includes a light emitting diode (LED) **58** positioned around the perimeter of the beamsplitting magnification optic **33** for providing illumination in the direction of the observer's eye **30**. The illumination is preferably in the infrared region. The eye position sensor system **56** also includes a detector array **60** positioned adjacent to the beamsplitting magnification optic **33** for detecting reflections of the illumination from the LED **58** off of the retina **62** of the observer's eye **30**, the reflections serving to indicate the position of the observer's eye **30**. The eye position sensor system **56** also includes a control mechanism **64** which the observer uses in combination with the detector array **60** to interact with the controlling device **54** to control the source object **14** produced by the microdisplay **12**.

The control mechanism **64** may be, for example, a button which the observer **30** depresses to indicate that the observer is looking at a selected item, such as a computer software icon. The control mechanism **64** may also be a timing mechanism which determines that the observer has selected an item based on the amount of time that the observer is looking in a particular direction.

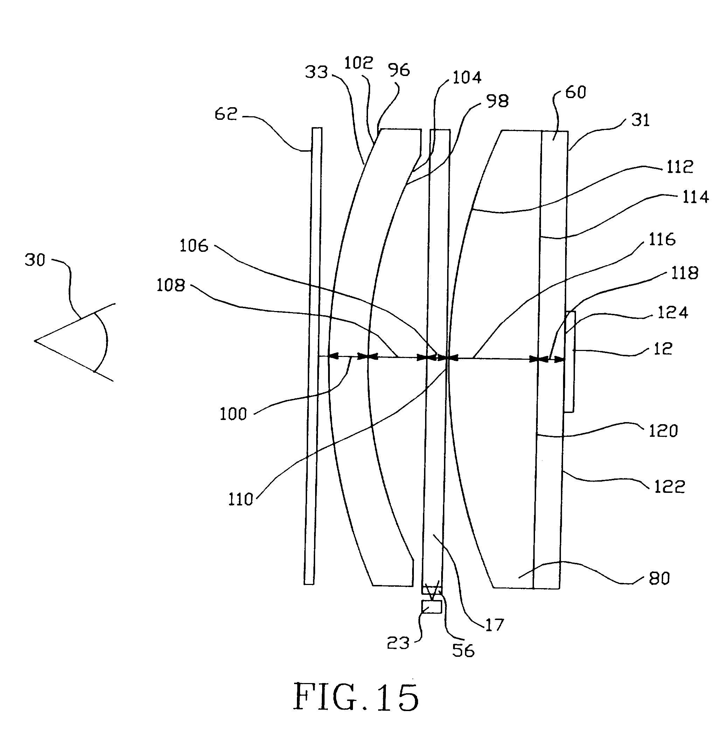

Figure 15 illustrates a preferred embodiment of the display system of the present invention in which a beamsplitting magnification optic is employed. The virtual image display system illustrated in Figure 15 includes a beamsplitting magnification optic **33**, a lens **80** and a reflective element **31** similar to those elements illustrated in Figure 4B. Also included in the virtual image display system is a wave guide illumination source **17**, a reflective microdisplay **12** and three polarization elements **56, 60** and **62.**

The beamsplitting magnification optic **33** is made from glass with an index of refraction of 1.51 such as BK7 or a similar type of glass. The beamsplitting magnification optic **33** has a thickness **100** of 0.08 inches and a diameter of 0.9 inches. A first surface **96** of the beamsplitting magnification optic **33** facing the eye **30** has a radius of curvature equal to 1.15 inches. A second surface **98** of the beamsplitting magnification optic **33** facing away from the eye **30** has a radius of curvature equal to 0.823 inches. A partially reflective beamsplitter coating **102** in the visible wavelength regime is applied to the first surface **96**. The second surface **98** includes an anti-reflection coating **104** for visible wavelengths.

The polarization element positioned nearest the eye **30** is a sheet polarizer **62** such as is available from the Polaroid Corporation.

The wave guide illumination source **17** includes an LED **23** which provides illumination to the reflective microdisplay **12**. The output of the LED **23** is polarized by a polarizer **56**, thereby illuminating the reflective microdisplay **12** with polarized light. The wave guide illumination source **17** has a thickness **106** of 0.04 inches. The distance **108** between the beamsplitting magnification optic **33** and the wave guide illumination source **17** is 0.1209 inches.

Lens **80** is positioned a distance **110** of 0.005 inches from the wave guide **17.** Lens **80** is made from glass with an index of refraction of 1.51 such as BK7 or a similar type of glass. Lens **80** has a first surface **112** facing the eye **30** with a radius of curvature of 1.02 inches and a second flat surface **114.** The first surface **112** is anti-reflection coated for visible wavelengths. The second surface **114** is uncoated. Lens **80** has a thickness **116** of 0.210 inches and a diameter of 0.9 inches.

A quarter waveplate **60** in the visible wavelength regime, such as is available from Virgo Optics in Port Richey, Florida, is positioned in contact with lens **80.** The quarter waveplate **60** has a thickness **118** of 0.04 inches. The quarter waveplate **60** includes a first surface **120** facing the eye which is uncoated and a second surface **122** facing away from the eye **30** which is coated with aluminum or other suitable reflective material except for a small rectangular region **124** in the center of the waveplate where the reflective microdisplay **12** is positioned. The first uncoated surface **120** of the quarter waveplate **60** is placed in optical contact with lens **80** using a suitable transparent optical cement. The display **12** is placed in contact with the uncoated rectangular region **124** of the quarter waveplate.

In an alternative arrangement included herein for reference, where separate first and second magnification optics are employed, the electronic display also includes an intermediate image synthesizing optic which provides a synthesized electronic display with enhanced eye relief and a wider field of view than is possible using a traditional compound magnification system. For example, the synthesized electronic display enables the observer to view the display over a 34 degree full angle field of view with at least about a 35 mm eye relief.

The image synthesizing optic **42** should be positioned at or adjacent to the source object plane. Thus, the image synthesizing optic **42** is preferably positioned adjacent to or integrally incorporated into the microdisplay **12**.

The image synthesizing optic **42** may be any optic which produces a directly viewable image when placed in the source object plane of a magnification optic. For example, as illustrated in Figure 2B, the image synthesizing optic **42** may be a light transmissive microdisplay **12.**

The image synthesizing optic **42** is preferably designed such that a large fraction of the light is redirected so that the entirety of the image remains visible as the eye is moved laterally relative to the second stage magnification optic **26**. In order to achieve the desired amount of light redirection, the numerical aperture of the directed light is preferably on the order of the (radius of the second stage magnification optic) / (focal length of the second stage magnification optic).

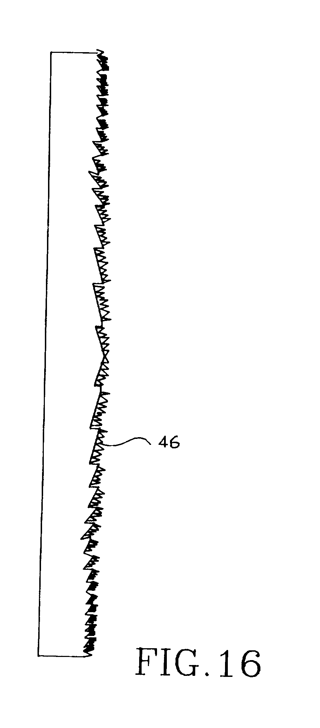

A suitable light redirecting image synthesizing optic is illustrated in Figure 16 in which a series of micro lenses **46** on the order 5 - 10 microns in diameter are used to form small focal length positive or negative lenses. The outputs of the micro lenses may be tilted to direct a large fraction of the light towards the exit pupil of the second magnification optic **26.**

When a light transmissive image synthesizing optic is employed, the image synthesizing optic should be substantially transparent. In addition, the image synthesizing optic can be diffuse such that light is scattered as the light passes throughout the diffusing material. The diffusive scatter performs the function of modifying the numerical aperture of the light. Examples of suitable light diffusing image synthesizing optic materials include ground glass, opal glass, holographic diffusers, thin diffusive plastics such as polystyrene and molded plastic with diffusing surfaces. In a particularly preferred embodiment, a light transmissive microdisplay is employed which serves the dual function of the microdisplay **12** and the intermediate synthesizing optic **42**.

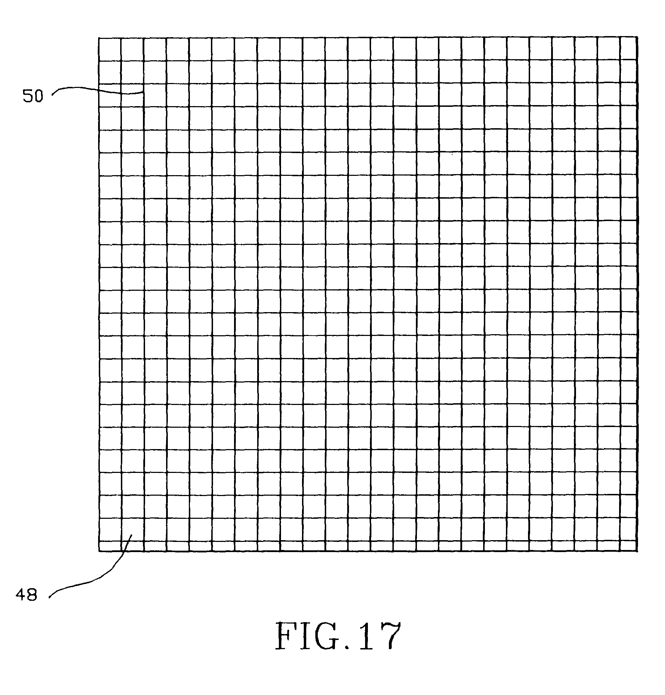

When a light diffusive material is used, the diffusive material should be thinner than the size of the pixels projected onto the image synthesizing optic to prevent secondary scattering of the light within the diffusive material into neighboring pixels, thereby blurring the pixels. Pixel blurring due to secondary scatter may be overcome using an array of pixels formed of a diffusive material as illustrated in Figure 17.

As illustrated in Figure 17, the diffusive image synthesizing optic is composed of an array of individual pixels **48** where each pixel is separated by opaque barrier **50** which prevents light from one pixel from being scattered by secondary scatter into a neighboring pixel. The opaque barrier **50** is preferably reflective but may also form a light absorbing barrier.

Also described herein for the sake of reference is a synthesized virtual image electronic display that includes a microdisplay for forming a source object which preferably has a surface area less than about 100 mm², a first stage magnification optic for magnifying the source object to produce a magnified real image, an image synthesizing optic upon which the magnified real image is projected, and a second stage magnification optic for providing a magnified virtual image of the magnified real image projected on the synthesizing optic. The image synthesizing optic provides the synthesized display of the present invention with significant optical and ergonomic advantages over that which can be achieved using prior art simple magnification and compound magnification systems.

Also described is an electronic device which includes the synthesized display. The synthesized display is intended as an inexpensive component which may be incorporated into any electronic device in which an electronic display is needed.

The two stages of magnification optics and intermediate image synthesizing optic used in the synthesized display provide the significant advantage of enabling the synthesized display to be positioned within a small volume. It is preferred that the synthesized display be positioned within a volume of less than about 375 cubic centimeters, more preferably within a volume of less than about 94 cubic centimeters.

The synthesized virtual image electronic display, hereinafter referred to as the synthesized display magnifies the source object formed by a microdisplay using a compound magnification system which is comprised of two stages of magnification optics. A first stage magnification optic provides a real image of the source object formed by the microdisplay which is magnified and located in the focal plane of the second stage magnification optic. The second stage magnification optic then provides a further magnified virtual image to be viewed by the eye of the user.

Unlike conventional prior art compound magnification systems, the synthesized display also employs an image synthesizing optic positioned between the first and second stage magnification optics in the focal plane of the second stage magnification optics. The synthesizing optic provides a synthesis function of the real image from the first stage magnification optics. Because the real image produced by the first magnification optic is located on the image synthesizing optic, an image of each pixel is located on that optic, each pixel being represented in that image as either the presence or absence of light from the object as magnified by the first magnification optics. The light from each pixel represents the real image of that pixel and has a well defined cone angle and a well defined central ray of that cone, such cone angle and central ray being determined by the corresponding object pixel location and by the first stage magnification optics. The image synthesizing optic serves to alter the direction of the central ray and alter the cone angle and the shape of the cone to provide enhanced properties to the virtual image provided by the second stage magnification optics.

By using two stages of magnification optics and an intermediate image synthesizing optic, the size of the components and spacing between the components employed in the synthesized display is reduced such that the display can be positioned within a small volume. The synthesized display is preferably positionable within a volume of less than about 375 cubic centimeters, most preferably less than about 94 cubic centimeters. These volumes respectively correspond to the volume created by a 100 mm and 25 mm thick electronic device employing an approximately 50 x 75 mm PCMCIA card.

The use of two stages of magnification optics in combination with an intermediate image synthesizing optic provides the synthesized display with enhanced eye relief and a wider field of view than is possible using a traditional compound microscope system. For example, the synthesized display enables the user to view the display over a 30 degree full angle field of view with at least about a 25 mm eye relief.

The synthesized display is intended as an inexpensive electronic component which may be incorporated into any electronic device in which an electronic display is used. In particular, the synthesized display is designed for pocket-sized electronic devices. Examples of such devices include, but are not limited to, portable computers, personal communicators, personal digital assistants, modems, pagers, video and camera viewfinders, mobile phones, television monitors and other hand held devices.

The synthesized display preferably provides a magnified virtual image of a source object that has been magnified by a factor of at least about 20, most preferably by a factor of at least about 40. The source object preferably has a surface area equal to or less than about 100 mm², most preferably equal to or less than about 25 mm². It should be noted, however, that the present invention can be readily applied to magnifications less than 20 and to microdisplays that form source objects larger than 100 mm². The first stage magnification optic preferably provides a magnification of between about 3 and 10 and a focal length of between about 3.5 and 37.5 mm. The second stage magnification optic also preferably provides a magnification of between about 4 and 7.

The synthesized display preferably provides an eye relief equal to or greater than about 15 mm, more preferably equal to or greater than about 35 mm, most preferably equal to or greater than about 50 mm. The synthesized display also preferably provides an image which is at least equivalent in size to a computer monitor (24 cm x 18 cm) when viewed at 50 cm. This size is roughly equivalent to a large screen TV (100 cm diagonal) when viewed at 165 cm.

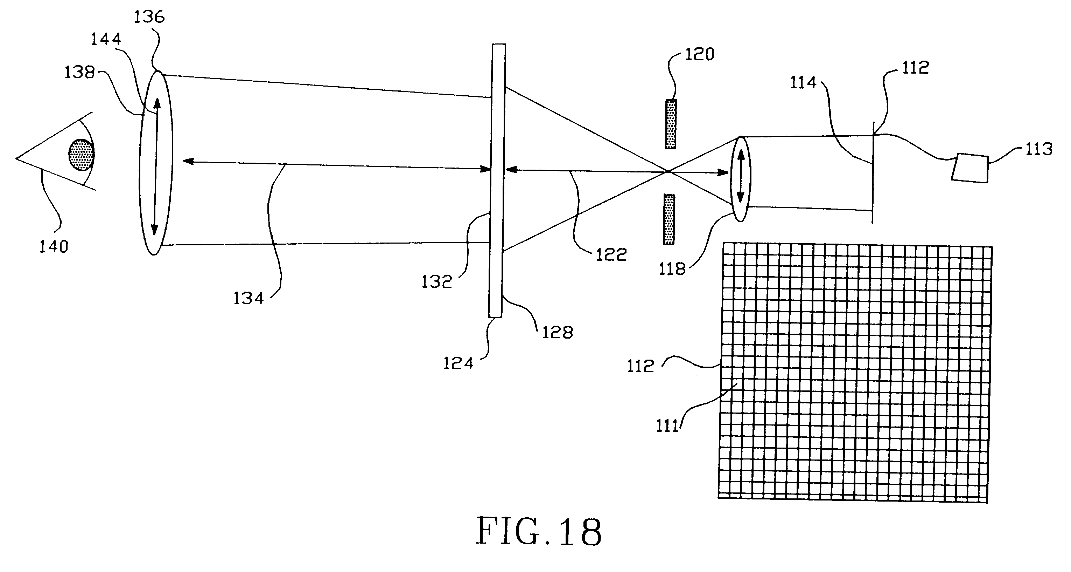

An example synthesized display is illustrated in Figure 18. As illustrated in Figure 18, the synthesized display includes a microdisplay **112** which forms a source object **114**. The microdisplay may be any electronically activated display which produces an image of any type. For example, the microdisplay may be a liquid crystal display, a CRT, a spatial light modulator, a grating, a mirror light valve or a LED array.

The microdisplay is frequently the most expensive component of the synthesized display. It is therefore preferred that the size of the microdisplay be minimized. The microdisplay preferably has a surface area equal to or less than about 100 mm², most preferably equal to or less than about 25 mm². However, it should be understood that larger microdisplays may be employed. It is also preferred that the microdisplay **112** form a source object **114** using an array of pixels **111** on the microdisplay **112** wherein each pixel has an area equal to or less than about 400 square microns. more preferably 100 square microns.

In a preferred arrangement, the microdisplay used to form the source object is a spatial light modulator. Spatial light modulators, also known as light valves, are well known in the art for use in electronic display systems. In general, a spatial light modulator includes an addressable array of light modulating mirror elements which modulate incident light in a spatial pattern to produce an image. The array of modulating elements are modulated in response to an electrical or optical input where each light modulating element corresponds to a pixel of the image generated by the light modulator. Incident light may be modulated by the modulating elements with regard to phase, intensity, polarization, or direction. Light modulation may be achieved using a variety of materials exhibiting electrooptic or magnetooptic effects and by materials that modulate light by surface deformation. Electrical control of the addressable mirror elements forming the spatial modulator is described in U.S. Patent No. 4,441,791 issued to Hornbeck which is incorporated herein by reference. In the illustrated arrangement, a spatial light modulator is used to form a source object which is then magnified in two magnification stages. Examples of spatial light modulators that may be used in the synthesized display and their principle of operation are described in U.S. Patent Nos. 4,638,309, 4.680,579 issued to Ott, U.S. Patent No. 5,287,215 issued to Warde, U.S. Patent Nos. 4,441,791, 4,710,732, 4,596,992, 4,615,595, 4,662,746 and 5,061,049, 5.280,277 issued to Hornbeck, U.S. Patent Nos. 5,287,096 and U.S. Patent No. 5,170,283 issued to O'Brien, all of which are incorporated herein by reference.

The source object **114** formed by the microdisplay **112** is magnified by a first stage magnification optic **118** to produce a magnified virtual image. The first stage magnification optic **118** serves to reduce the degree of magnification required of the second stage magnification optic and thus provides a magnification greater than 1. The first stage magnification optic preferably provides a magnification greater than 3, most preferably between about 3 and 10. The first stage magnification optic **118** also preferably has an effective focal length between about 3.5 mm and 37.5 mm.

The magnified virtual image produced by the first stage magnification optic is projected on to a image synthesizing optic **124** to produce a magnified real image **126.** The light path between the first stage magnification optic **118** and the image synthesizing optic **124** is referred to as the first distance **122**. The first distance **122** is preferably between about 35 and 150 mm. In general, the distance between a magnification optic and the point at which the image is projected equals the focal length (f) of the optic multiplied by the magnification (m) plus 1, i.e., d = f * (m + 1). The upper limit of 150 mm corresponds to twice the preferred length of the container within which the synthesized display is contained. It should be noted, however, that larger containers may be employed and thus larger first distances **122** may be used.

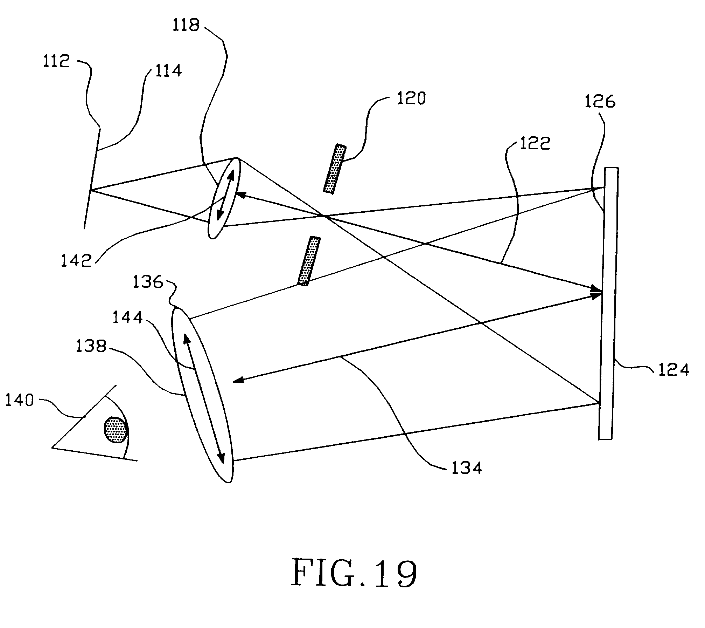

The image synthesizing optic **124** may be any device which produces a directly viewable image when placed in the real image plane of a magnification optic. As illustrated in Figure 18, the image synthesizing optic may be a light transmissive image synthesizing optic where the source object is imaged on to the rear surface **128** of the image synthesizing optic **124** to produce a magnified real image **126.** Alternatively, as illustrated in Figure 19, the magnified real image **126** may be projected on to a reflective image synthesizing optic **130**. The same reference numerals are employed with regard to Figure 19 as are employed in Figure 18.

The image synthesizing optic **124** is preferably designed such that a large fraction of the light is redirected so that the entirety of the image remains visible as the eye is moved laterally relative to the second stage magnification optic. In order to achieve the desired amount of light redirection, the numerical aperture of the directed light is preferably on the order of the (radius of the second stage magnification optic) / (focal length of the second stage magnification optic). In addition, the image synthesizing optic should redirect the central ray of the cone of light from each point on the image synthesizing optic to the center of the second magnification optic. A suitable light redirecting image synthesizing optic is illustrated in Figure 16 in which a series of micro lenses **46** on the order of 5-10 microns in diameter are used to form small focal length positive or negative lenses. The outputs of the micro lenses may be tilted to direct a large fraction of the light towards the eyepiece. In instances where individual mirror elements are discernible in the virtual image, it is preferred that the image synthesizing optic **124** be designed to alias the magnified real image **126**.

When a light transmissive image synthesizing optic is employed, the image synthesizing optic should be transparent. In addition, the image synthesizing optic can be diffuse such that light is scattered as the light passes throughout the diffusing material. The diffusive scatter performs the function of modifying the numerical aperture of the light. Examples of suitable light diffusing image synthesizing optic materials include ground glass, opal glass, holographic diffusers, thin diffusive plastics such as polystyrene and molded plastic with diffusing surfaces. When a light diffusive material is used, the diffusive material should be thinner than the size of the pixels projected onto the image synthesizing optic to prevent secondary scattering of the light within the diffusive material into neighboring pixels, thereby blurring the pixels. Pixel blurring due to secondary scatter may be overcome using an array of pixels formed of a diffusive material as illustrated in Figure 17. As illustrated in Figure 17, the diffusive image synthesizing optic is composed of an array of individual pixels **48** where each pixel is separated by opaque barrier **50** which prevents light from one pixel from being scattered by secondary scatter into a neighboring pixel. The opaque barrier **50** is preferably reflective but may also form a light absorbing barrier.

The magnified real image **126** projected onto the image synthesizing optic **124** is conveyed along a second distance **134** to a second stage magnification optic **136** which magnifies the magnified real image **126** to produce a magnified virtual image **138** which is seen by the user **140.** The second distance **134** is approximately equal to the focal length of the second stage magnification optic **136.**

The second stage magnification optic **136** is used to provide the user **140** with a magnified virtual image **138.** It is preferred that the eye relief provided by the second stage magnification optic **136** be equal to or greater than about 15 mm, more preferably equal to or greater than about 35 mm, most preferably equal to or greater than about 50 mm. The second stage magnification optic preferably provides magnification by a factor of at least about 4, more preferably by a factor between about 4 and 7.

The first and second stage magnification optics **118, 136** combine to magnify the source object formed by the microdisplay by a factor equal to or greater than about 20, more preferably equal to or greater than a factor of about 40. By using two magnification stages, the synthesized display of the present invention is able to employ smaller components and a more compact layout than is possible using one magnification stage corresponding to a projection system, thereby enabling the synthesized display to be positioned within a compact container. More specifically, by magnifying the source object **114** in two stages, the first and second stage magnification optics **118, 138** can have shorter diameters b than would be required to magnify the object in a single stage. The distance **122** between the first stage magnification optic **118** and the image synthesizing optic **124** and the distance **134** between the second stage magnification optic 38 and the image synthesizing optic **124** are also shorter than would be required to produce the same degree of magnification in a single stage. In addition, by employing a two stage magnification synthesized display, the degree of magnification needed in the second stage is reduced which. in turn, provides the user with a wider field of view and longer eye relief than compared to high power magnifying lens. The second stage magnification optic can be focused at a point near infinity which reduces the amount of eye strain caused when the user focuses his or her eyes on the synthesized display. These advantages of the compound magnification synthesized display of the present invention are explained in greater detail below by reference to the illustrative examples outlined in Table 2.

When the microdisplay used to form the source object is a spatial light modulator, an illumination source and a light aperture are generally needed to form the source object. An illumination source is needed since the source object formed by a spatial light modulator microdisplay is based on light from the illumination source that is either deflected or non-deflected by the microdisplay. In general, it is preferred that the source object be formed based on non-deflected light which provides a brighter image due to less light loss from reflection off of the array of addressable mirror elements.

The illumination source used to illuminate the microdisplay may be positioned such that illumination is provided off-axis relative to the light path of the image reflected off of the surface of the microdisplay. Off-axis illumination of the microdisplay is preferred in view of the light efficiency provided. Alternatively. illumination from the illumination source may be provided on-axis relative to the light path of the image reflected off of the surface of the microdisplay. When on-axis illumination is employed, a beamsplitter or other mechanism for distinguishing illumination light from light reflected off of the microdisplay is needed. The reflectance of the beamsplitter may be between about 20 and 80%, most preferably 50%. Beamsplitters have the disadvantage of only transmitting a small percentage of the light reflected off of the surface of the microdisplay, generally about 25%. As a result, systems using a beamsplitter generally provide a dimmer image than off-axis systems. It is also preferred that an illumination lens be positioned between the microdisplay and the illumination source to shape the light from the illumination source upon the array of addressable mirror elements on the surface of the microdisplay.

A quarter-waveplate and polarizer may be used as an alternative to a beamsplitter. The polarizer may be any device that preferably reflects one component of the light polarization. The polarizer is preferably a traditional calcite polarizer, a dielectrically coated cube, or a dielectric coated surface. The waveplate may be any device that produces approximately a quarter wave of phase lag between orthogonal polarization components. The waveplate is preferably a quartz quarter-waveplate. In order to achieve the greatest light efficiency, a polarized light source, such as a laser. is preferably used.

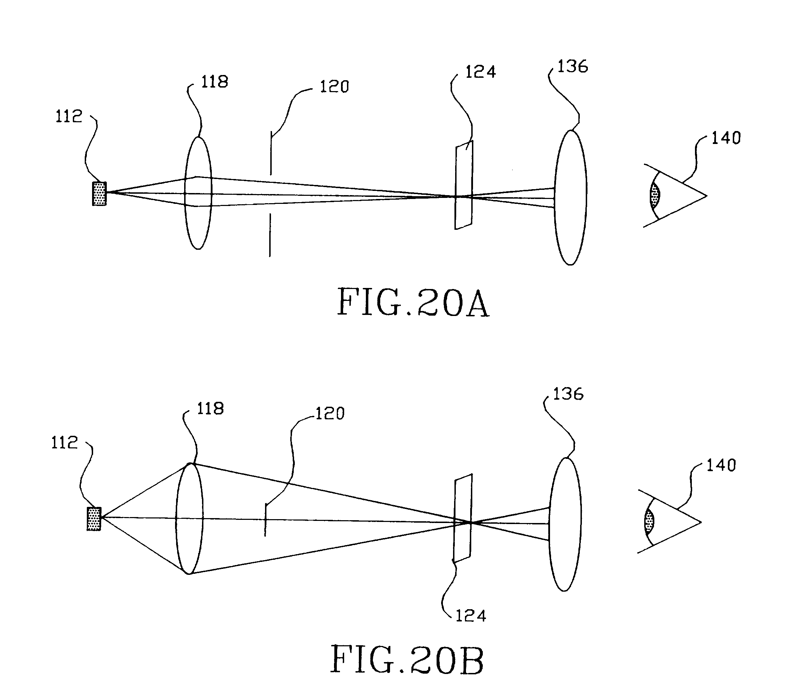

When a spatial light modulator is used to form the source object, an aperture is needed to distinguish between light that has been reflected off a pixel that has been modulated from light reflected off a pixel that has not been modulated. Figures 20A-B illustrate two types of light apertures that may be used. The aperture **147** illustrated in Figure 20A is designed to prevent light other than light constituting the image from reaching the image synthesizing optic by preventing the deflected light from passing though the aperture. In an alternative embodiment, illustrated in Figure 20B, the aperture may be a stop **149** that prevents non-deflected light from passing though the aperture. It should be noted, however, that any light aperture may be adapted for use in the present invention. Examples of other suitable apertures include, but are not limited to, phase plates and spatial filters.

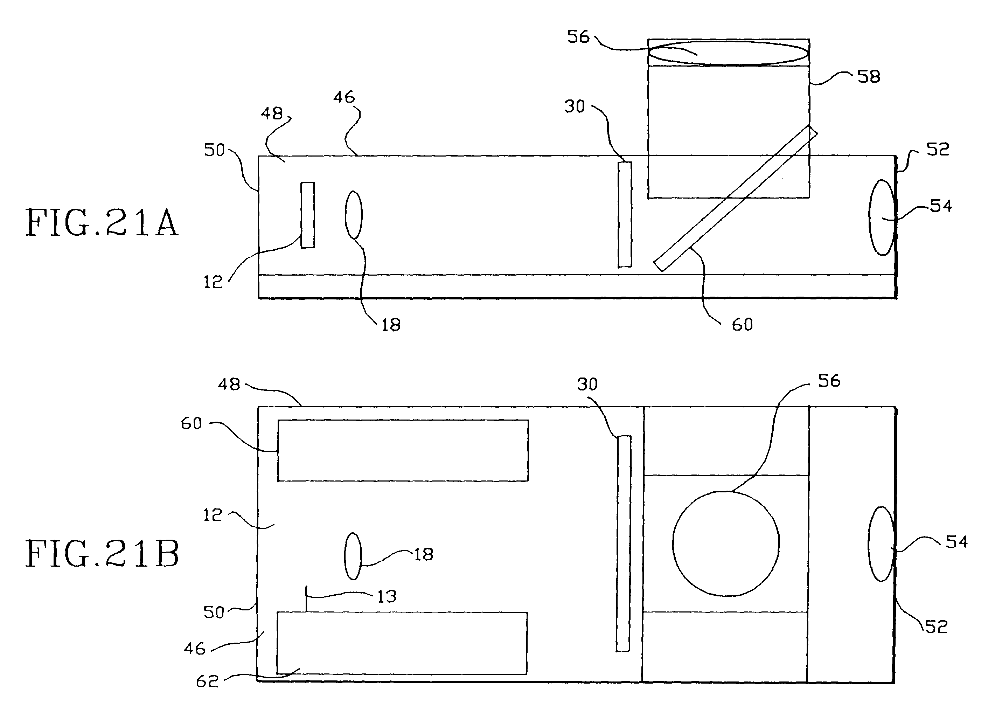

The synthesized display is intended as a component which may be incorporated into any electronic device. The incorporation of the synthesized display into an electronic device is illustrated in Figures 21A-B. Figure 21A illustrates a cross-sectional view of the device. Reference numerals **146, 148, 150** and **152** refer to the top, side and first and second ends of the device respectively. The synthesized display employed in Figure 21A has the same general layout as is illustrated in Figure 18. The same reference numerals are employed with regard to Figures 21A-B as are employed in Figure 18 with the exception of the magnification optics.

As illustrated in Figures 21A-B, the synthesized display of the electronic device includes two different second stage magnification optics **154, 156** which may be employed by the user as alternative viewing lenses. As illustrated in Figure 21A, one of the second stage magnification optics **154** is positioned on an end **150** of the device. The second stage magnification optic **156** is positioned on the top **146** of the device. The surface area on the top of the device is larger than the other surfaces of the device. As a result, the top **146** can accommodate a larger sized optic than the other surfaces. By using a larger diameter optic, the user is provided with a wider field of view and greater eye relief.

Figure 21A illustrates an arrangement in which the user is able to select which second stage magnification optic **154, 156** to employ as a viewing lens. In this arrangement, second stage magnification optic **156** is attached to an extendible and retractable viewing assembly **158**. When the viewing assembly **158** is extended, a moveable mirror **160** rotates into the path between the image synthesizing optic **130** and second stage magnification optic **154,** thereby diverting the image to second stage magnification optic **156.**

Figure 21B illustrates the electronics **160, 162** included within the device. Electronic element **162** serves as an input device for microdisplay **112** and is electronically attached to the microdisplay **112** by input **113.** The input device provides the microdisplay **112** with an electrical signal from which the microdisplay **112** produces an electronically formed source object.

Table 2 provides three examples of synthesized virtual image systems. All examples use the same sized microdisplay and provide the same degree of magnification and eye relief. The second and third examples provide no magnification in the first and second magnification stage respectively. As a result, the second and third examples reflect a single stage magnification system which provides a real image and a virtual image respectively.

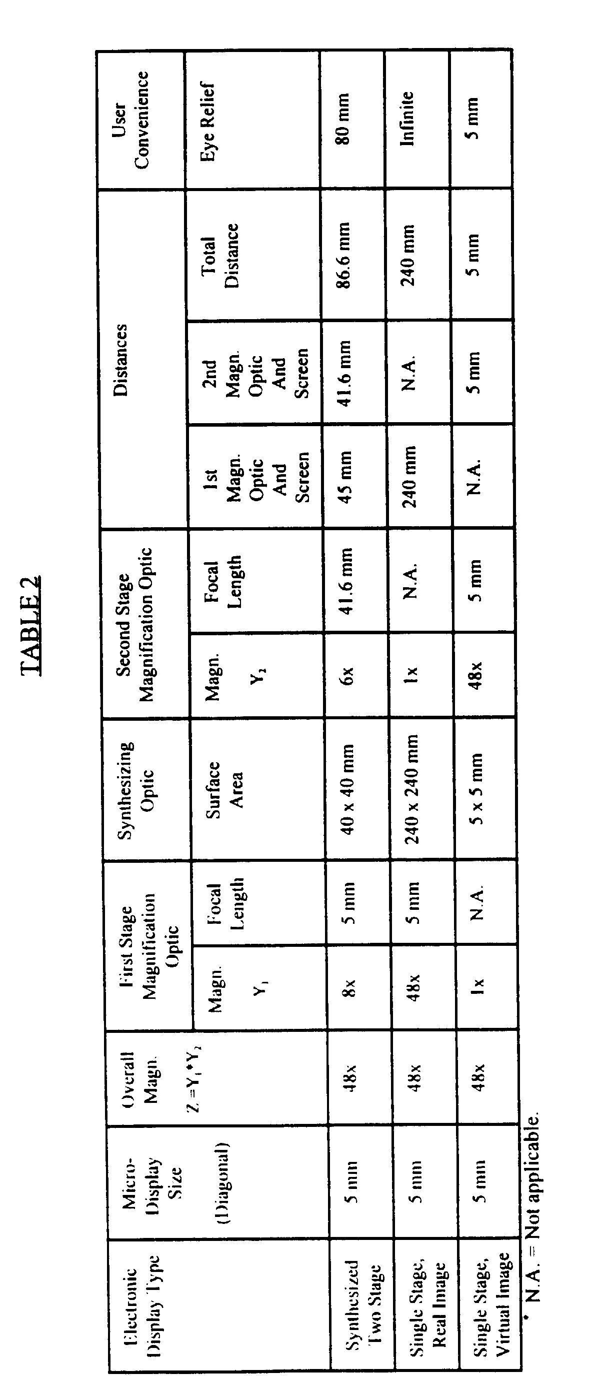

As illustrated in Table 2, the synthesized display provides an overall image magnification of 48 (Z = Y¹ * Y²). In the first stage, the object is magnified by the first stage magnification optic **118** by a factor of 8 (Y¹ = 8). In the second stage, the image is magnified by the second stage magnification optic **136** by a factor of 6 (Y² = 6). Because the first stage magnification optic **118** only magnifies the source object **114** by a factor of 8 (Y¹), the image synthesizing optic **124** need only be a factor of 8 (Y¹ = 8) larger than the first, source object **114** in order to accommodate the magnified real image **126**. As shown in Table 2, the image synthesizing optic **124** employed may be 6 times (Y² = 6) smaller than the image synthesizing optic used in the corresponding single stage real image electronic display without reducing the size of the image as resolved by the user. The 240 x 240 mm² image synthesizing optic required in the single stage real image electronic display limits the degree to which the display may be miniaturized.

In order to provide a total magnification of 48x, the second stage magnification optic **136** magnifies the magnified real image **126** by a factor of 6 (Y² = 6). This is a factor of 8 (Y¹ = 8) less magnification than the second stage magnification optic used in the corresponding single stage display. By reducing the degree of magnification performed in the second stage, the user is provided with significantly greater eye relief than the virtual image display where the magnification is performed in a single step.

In the single stage real image electronic display system. i.e., where the second stage magnification optic **136** provides no magnification, (i.e., Y¹ = 1), the image synthesizing optic **124** is employed to provide an real image to the user 40. In this system, the screen must be a factor of Y² larger than the image synthesizing optic employed in the two stage magnification system in order to provide the user with an equivalently magnified image. In addition, the first distance **122** must be increased in order for the first stage magnification optic **118** to achieve a factor of Y² greater magnification.

In an embodiment in which no intermediate image synthesizing optic is used to provide a magnified real image, the electronic display becomes analogous to a compound microscope. In a compound microscope, the user's eye must be in the direct line of site of the source object being magnified. Slight lateral movement of the eye relative to the second stage magnification optic causes the image to no longer be visible.

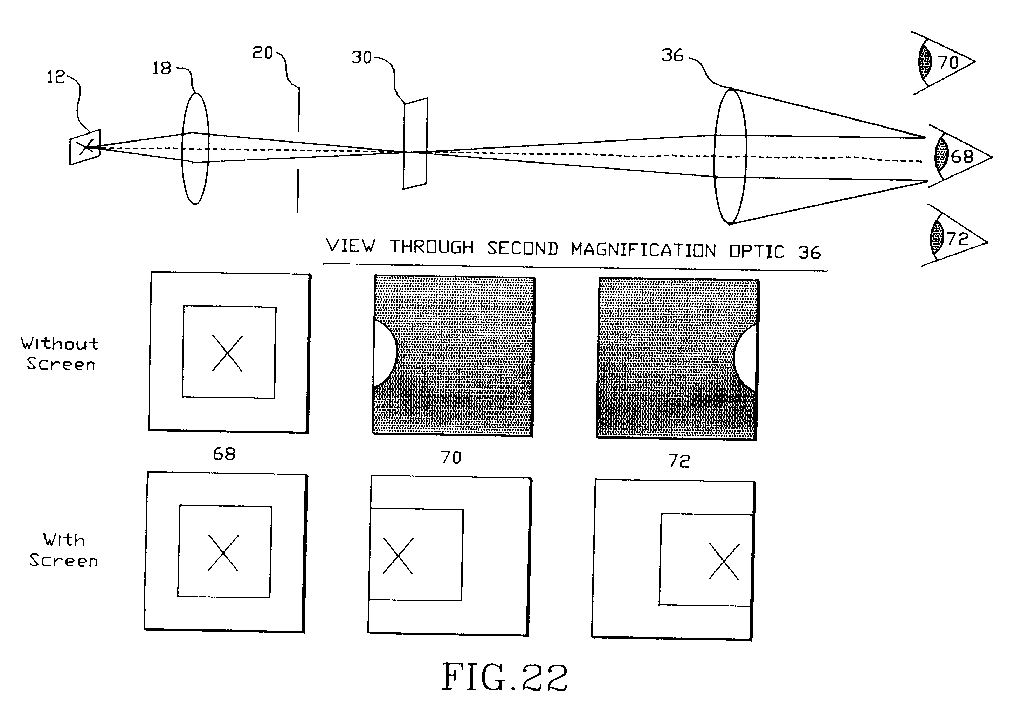

As illustrated in Figure 22, when an intermediate image synthesizing optic **130** is employed, movement of the user's eye laterally relative to the second stage magnification optic from position **168** to either position **170** or position **172** causes the image to move within the field of view in the opposite direction. However, when the image synthesizing optic **130** is removed, also illustrated in Figure 22, comparable lateral movement of the eye relative to the second stage magnification optic causes the image to vignette and disappear. This can be explained by the longer distance between the second stage magnification optic and the source object being magnified (the microdisplay) when the intermediate image synthesizing optic is removed. By using an intermediate image synthesizing optic, the distance between the second stage magnification optic and the source object being magnified is significantly reduced, thereby providing the user with a wider field of view.

The foregoing description of preferred embodiments of the present invention has been provided for the purposes of illustration and description. It is not intended to be exhaustive or to limit the invention to the precise forms disclosed. Obviously, many modifications and variations will be apparent to practitioners skilled in this art. The embodiments were chosen and described in order to best explain the principles of the invention and its practical application, thereby enabling others skilled in the art to understand the invention for various embodiments and with various modifications as are suited to the particular use contemplated.

## Claims

1. A compact virtual image electronic display system (10) comprising:
a microdisplay (12) for producing a source object (14);
a beamsplitting magnification optic (33), the microdisplay (12) and the beamsplitting magnification optic (33) each having a centrepoint defining a first optical axis (18), the beamsplitting magnification optic having a refractive function and a partially reflective function for receiving light corresponding to the source object (14), and magnifying and reflecting a portion of the light to produce a magnified virtual image (20) of the source object, the centre of the magnified virtual image and the centrepoint of the magnification optic (33) defining a second optical axis (24), the second optical axis (24) being at an angle φ relative to the first optical axis (18);
a reflective element (31) positioned to reflect light corresponding to the magnified virtual image (20) toward the beamsplitting magnification optic (33);
the beamsplitting magnification optic (33) positioned to receive light corresponding to the reflected magnified virtual image (20), the beamsplitting magnification optic (33) functioning to magnify and transmit a portion of the light corresponding to the reflected magnified virtual image (20) through the beamsplitting magnification optic to provide a compound magnified image (28) of the magnified virtual image (20) to an observer (30), the angle φ between the first and second optical axes (18, 24) being sufficiently small that the source object (14) is within a full field of view (25) provided by the beamsplitting magnification optic (33).

2. The display system according to Claim 1 wherein the second optical axis (24) is at an angle φ equal to or less than about 10° relative to the first optical axis (18).

3. The display system according to Claim 1 wherein the second optical axis (24) is at an angle φ equal to or less than about 5° relative to the first optical axis (18).

4. The display system according to Claim 1 wherein the microdisplay (12) is a reflective microdisplay.

5. The display system according to Claim 1 wherein the microdisplay (12) is a spatial light modulator.

6. The display system according to Claim 1 wherein the microdisplay (12) is a light transmissive microdisplay.

7. The display system according to Claim 4 wherein the microdisplay (12) is a liquid crystal display.

8. The display system according to Claim 1 wherein the microdisplay (12) is between about 3mm and 15mm of the beamsplitting magnification optic (33).

9. The display system according to Claim 1 wherein the microdisplay (12) is between about 5mm and 10mm of the beamsplitting magnification optic (33).

10. The display system according to Claim 1 wherein the microdisplay (12) is positioned adjacent to the reflective element (31).

11. The display system according to Claim 1 wherein the spacing between the beamsplitting magnification optic (33) and the reflective element (31) is equal to or less than about 15mm.

12. The display system according to Claim 5 wherein the spacing between the beamsplitting magnification optic (33) and the reflective element (31) is equal to or less than about 7mm.

13. The display system according to Claim 1 wherein the thickness of the display system (10) along the first optical axis (18) is equal to or less than about 15mm.

14. The display system according to Claim 1 wherein the beamsplitting magnification optic (33) is between about 25% and 75% reflective.

15. The display system according to Claim 1 wherein the beamsplitting magnification optic (33) is between about 40% and 50% reflective.

16. The display system according to Claim 1 wherein the compound magnified virtual image (20) is magnified by a factor of at least 10.

17. The display system according to Claim 1 wherein the compound magnified virtual image (20) is magnified by a factor of at least 20.

18. The display system according to Claim 1 wherein the beamsplitting magnification optic (33) includes a refractive surface proximal to the observer (30).

19. The display system according to Claim 1 further including an eye position sensor for detecting a portion of the full field of view (25) on which the eye is focused.

20. The display system according to Claim 1 wherein the distance between the beamsplitting magnification optic (33) and the reflective element (31) along the first optical axis (18) is adjustable.

21. The display system according to Claim 20 wherein the distance between the beamsplitting magnification optic (33) and the reflective element (31) is adjustable by the observer (30).

22. The display system according to Claim 20 wherein the display system (10) further includes a distance adjusting mechanism for adjusting the distance between the beamsplitting magnification optic (33) and the reflective element (31).

23. The display system according to Claim 22 wherein the display system (10) further includes a distance sensing mechanism which senses the distance between the beamsplitting magnification optic (33) and the reflective element (31) and communicates the distance to the control mechanism which is operable to modify the source object (14) in response.

## Patentansprüche

1. Kompaktes elektronisches Anzeigesystem (10) für ein virtuelles Bild, mit:
einer Mikroanzeige (12) zur Erzeugung eines Ausgangsgegenstandes (14),
einer Vergrößerungsoptik (33) mit Strahlaufspaltung, wobei die Mikroanzeige (12) und die Vergrößerungsoptik (33) mit Strahlaufspaltung jeweils einen Mittelpunkt haben, die eine erste optische Achse (18) definieren, wobei die Vergrößerungsoptik mit Strahlaufspaltung eine refraktive Funktionsweise und eine teilweise reflektive Funktionsweise hat, um Licht zu empfangen, welches dem Ausgangsgegenstand (14) entspricht, und
einen Teil des Lichtes vergrößert und reflektiert, um ein vergrößertes virtuelles Bild (20) des Quellgegenstandes zu erzeugen, wobei das Zentrum des vergrößerten virtuellen Bildes und das Zentrum der Vergrößerungsoptik (33) eine zweite optische Achse (24) definieren, wobei die zweite optische Achse (24) unter einem Winkel φ relativ zu der ersten optischen Achse (18) liegt,
einem Reflexionselement (31), welches so angeordnet ist, daß es Licht, welches dem vergrößerten virtuellen Bild (20) entspricht, in Richtung der Vergrößerungsoptik (33) mit Strahlaufspaltung reflektiert,
wobei die Vergrößerungsoptik (33) mit Strahlaufspaltung so positioniert ist, daß sie Licht, welches dem reflektierten, vergrößerten virtuellen Bild (20) entspricht, empfängt, und die Vergrößerungsoptik (33) mit Strahlaufspaltung so wirkt, daß sie einen Teil des Lichtes, welches dem reflektierten, vergrößerten virtuellen Bild (20) entspricht, vergrößert und überträgt, und zwar durch die Vergrößerungsoptik mit Strahlaufspaltung, um ein zusammengesetztes, vergrößertes Bild (28) des vergrößerten virtuellen Bildes (20) für einen Beobachter (30) bereitzustellen, wobei der Winkel φ zwischen den ersten und zweiten optischen Achsen (18, 24) ausreichend klein ist, so daß der Quellgegenstand (14) sich innerhalb eines vollen Gesichtsfeldes (25) befindet, welches durch die Vergrößerungsoptik (33) mit Stahlaufspaltung bereitgestellt wird.

2. Anzeigesystem nach Anspruch 1, wobei die zweite optische Achse (24) sich unter einem Winkel φ relativ zu der ersten optischen Achse (18) erstreckt, der kleiner oder gleich etwa 10° ist.

3. Anzeigesystem nach Anspruch 1, wobei die zweite optische Achse (24) sich unter einem Winkel φ relativ zu der ersten optischen Achse (18) erstreckt, der kleiner oder gleich etwa 5° ist.

4. Anzeigesystem nach Anspruch 1, wobei die Mikroanzeige (12) eine reflektive Mikroanzeige ist.

5. Anzeigesystem nach Anspruch 1, wobei die Mikroanzeige (12) ein räumlicher Lichtmodulator bzw. Raumlichtmodulator ist.

6. Anzeigesystem nach Anspruch 1, wobei die Mikroanzeige (12) eine lichtdurchlässige Mikroanzeige ist.

7. Anzeigesystem nach Anspruch 4, wobei die Mikroanzeige (12) eine Flüssigkristallanzeige ist.

8. Anzeigesystem nach Anspruch 1, wobei die Mikroanzeige (12) sich zwischen etwa 3 mm und 15 mm von der Vergrößerungsoptik (33) mit Strahlaufspaltung entfernt befindet.

9. Anzeigesystem nach Anspruch 1, wobei die Mikroanzeige (12) sich in einem Abstand zwischen etwa 5 mm und 10 mm von der Vergrößerungsoptik (33) mit Strahlaufspaltung befindet.

10. Anzeigesystem nach Anspruch 1, wobei die Mikroanzeige (12) sich neben bzw. an dem Reflexionselement (31) befindet bzw. angeordnet ist.

11. Anzeigesystem nach Anspruch 1, wobei der Abstand zwischen der Vergrößerungsoptik (33) mit Strahlaufspaltung und dem Reflexionselement (31) kleiner oder gleich etwa 15 mm ist.

12. Anzeigesystem nach Anspruch 5, wobei der Abstand zwischen der Vergrößerungsoptik (33) mit Strahlaufspaltung und dem Reflexionselement (31) kleiner oder gleich etwa 7 mm ist.

13. Anzeigesystem nach Anspruch 1, wobei die Dicke des Anzeigesystems (10) entlang der ersten optischen Achse (18) kleiner oder gleich etwa 15 mm ist.

14. Anzeigesystem nach Anspruch 1, wobei die Vergrößerungsoptik (33) mit Strahlaufspaltung zwischen etwa 25% und 75% reflektiv ist.

15. Anzeigesystem nach Anspruch 1, wobei die Vergrößerungsoptik (33) mit Strahlaufspaltung zwischen etwa 40% und 50% reflektiv ist (reflektiert).

16. Anzeigesystem nach Anspruch 1, wobei das zusammengesetzte, vergrößerte virtuelle Bild (20) durch einen Faktor von zumindest 10 vergrößert ist.

17. Anzeigesystem nach Anspruch 1, wobei das zusammengesetzte, vergrößerte virtuelle Bild (20) um einen Faktor von zumindest 20 vergrößert ist.

18. Anzeigesystem nach Anspruch 1, wobei die Vergrößerungsoptik (33) mit Strahlaufspaltung eine dem Beobachter (30) nächstgelegene refraktive Oberfläche aufweist.

19. Anzeigesystem nach Anspruch 1, welche weiterhin einen Augenpositionssensor für die Erfassung eines Teiles des gesamten Gesichtsfeldes (25) aufweist, auf welches das Auge fokussiert wird.

20. Anzeigesystem nach Anspruch 1, wobei der Abstand zwischen der Vergrößerungsoptik (33) mit Strahlaufspaltung und dem Reflexionselement (31) entlang der ersten optischen Achse (18) einstellbar ist.

21. Anzeigesystem nach Anspruch 20, wobei der Abstand zwischen der Vergrößerungsoptik (33) mit Strahlaufspaltung und dem Reflexionselement (31) durch den Beobachter (30) einstellbar ist.

22. Anzeigesystem nach Anspruch 20, wobei das Anzeigesystem (10) weiterhin einen Abstandseinstellmechanismus für das Einstellen des Abstandes zwischen der Vergrößerungsoptik (33) mit Strahlaufspaltung und dem Reflexionselement (31) aufweist.

23. Anzeigesystem nach Anspruch 22, wobei das Anzeigesystem (10) weiterhin einen Abstandserfassungsmechanismus aufweist, welcher den Abstand zwischen der Vergrößerungsoptik (33) mit Strahlaufspaltung und dem Reflexionselement (31) erfaßt bzw. registriert und diesen Abstand an den Steuermechanismus weitergibt, der in der Lage ist, unter Ansprechen darauf den Ausgangsgegenstand (14) zu modifizieren.

## Revendications

1. Système électronique compact (10) d'affichage d'image virtuelle, comprenant :
un micro-afficheur (12) destiné à produire un objet (14) de source ;
un élément optique (33) d'agrandissement par division de faisceau, le micro-afficheur (12) et l'élément optique (33) d'agrandissement par division de faisceau comportant chacun un point central définissant un premier axe optique (18), l'élément optique d'agrandissement par division de faisceau assurant une fonction de réfraction et une fonction de réflexion partielle pour recevoir de la lumière correspondant à l'objet (14) de source, et agrandissant et réfléchissant une partie de la lumière pour produire une image virtuelle agrandie (20) de l'objet de source, le centre de l'image virtuelle agrandie et le point central de l'élément optique (33) d'agrandissement définissant un second axe optique (24), le second axe optique (24) étant à un angle φ par rapport au premier axe optique (18) ;
un élément réfléchissant (31) positionné pour réfléchir de la lumière correspondant à l'image virtuelle agrandie (20) vers l'élément optique (33) d'agrandissement par division de faisceau ;
l'élément optique (33) d'agrandissement par division de faisceau étant positionné pour recevoir de la lumière correspondant à l'image virtuelle agrandie réfléchie (20), l'élément optique (33) d'agrandissement par division de faisceau servant à agrandir et à transmettre une partie de la lumière correspondant à l'image virtuelle agrandie réfléchie (20) à travers l'élément optique d'agrandissement par division de faisceau pour fournir une image agrandie combinée (28) de l'image virtuelle agrandie (20) à un observateur (30), l'angle φ entre les premier et second axes optiques (18, 24) étant suffisamment petit pour que l'objet (14) de source se trouve à l'intérieur d'un champ visuel complet (25) fourni par l'élément optique (33) d'agrandissement par division de faisceau.

2. Système d'affichage selon la revendication 1, dans lequel le second axe optique (24) est à un angle φ égal ou inférieur à environ 10° par rapport au premier axe optique (18).

3. Système d'affichage selon la revendication 1, dans lequel le second axe optique (24) est à un angle φ égal ou inférieur à environ 5° par rapport au premier axe optique (18).

4. Système d'affichage selon la revendication 1, dans lequel le micro-afficheur (12) est un micro-afficheur réfléchissant.

5. Système d'affichage selon la revendication 1, dans lequel le micro-afficheur (12) est un modulateur spatial de lumière.

6. Système d'affichage selon la revendication 1, dans lequel le micro-afficheur (12) est un micro-afficheur transmettant de la lumière.

7. Système d'affichage selon la revendication 4, dans lequel le micro-afficheur (12) est un afficheur à cristaux liquides.

8. Système d'affichage selon la revendication 1, dans lequel le micro-afficheur (12) se trouve entre environ 3 mm et 15 mm de l'élément optique (33) d'agrandissement par division de faisceau.

9. Système d'affichage selon la revendication 1, dans lequel le micro-afficheur (12) se trouve entre environ 5 mm et 10 mm de l'élément optique (33) d'agrandissement par division de faisceau.

10. Système d'affichage selon la revendication 1, dans lequel le micro-afficheur (12) est placé adjacent à l'élément réfléchissant (31).

11. Système d'affichage selon la revendication 1, dans lequel l'espace entre l'élément optique (33) d'agrandissement par division de faisceau et l'élément réfléchissant (31) est égal ou inférieur à environ 15 mm.

12. Système d'affichage selon la revendication 5, dans lequel l'espace entre l'élément optique (33) d'agrandissement par division de faisceau et l'élément réfléchissant (31) est égal ou inférieur à environ 7 mm.

13. Système d'affichage selon la revendication 1, dans lequel l'épaisseur du système (10) d'affichage le long du premier axe optique (18) est égale ou inférieure à environ 15 mm.

14. Système d'affichage selon la revendication 1, dans lequel l'élément optique (33) d'agrandissement par division de faisceau a un pouvoir réfléchissant entre environ 25 % et 75 %.

15. Système d'affichage selon la revendication 1, dans lequel l'élément optique (33) d'agrandissement par division de faisceau a un pouvoir réfléchissant entre environ 40 % et 50 %.

16. Système d'affichage selon la revendication 1, dans lequel l'image virtuelle agrandie combinée (20) est agrandie par un facteur d'au moins 10.

17. Système d'affichage selon la revendication 1, dans lequel l'image virtuelle agrandie combinée (20) est agrandie par un facteur d'au moins 20.

18. Système d'affichage selon la revendication 1, dans lequel l'élément optique (33) d'agrandissement par division de faisceau comprend une surface de réfraction proximale à l'observateur (30).

19. Système d'affichage selon la revendication 1, comprenant en outre un capteur de position d'oeil destiné à détecter une partie du champ visuel complet (25) sur lequel l'oeil est focalisé.

20. Système d'affichage selon la revendication 1, dans lequel on peut régler la distance entre l'élément optique (33) d'agrandissement par division de faisceau et l'élément réfléchissant (31) le long de l'axe optique (18).

21. Système d'affichage selon la revendication 20, dans lequel l'observateur (30) peut régler la distance entre l'élément optique (33) d'agrandissement par division de faisceau et l'élément réfléchissant (31).

22. Système d'affichage selon la revendication 20, dans lequel le système (10) d'affichage comprend en outre un mécanisme de réglage de distance destiné à régler la distance entre l'élément optique (33) d'agrandissement par division de faisceau et l'élément réfléchissant (31).

23. Système d'affichage selon la revendication 22, dans lequel le système (10) d'affichage comprend en outre un mécanisme de détection de distance qui détecte la distance entre l'élément optique (33) d'agrandissement par division de faisceau et l'élément réfléchissant (31), et qui transmet la distance au mécanisme de commande qui, en réponse, peut fonctionner pour modifier l'objet (14) de source.
